(19) Europäisches Patentamt
European Patent Office
Office européen des brevets

(11) EP 0 745 646 B1

(12) EUROPÄISCHE PATENTSCHRIFT

(45) Veröffentlichungstag und Bekanntmachung des Hinweises auf die Patenterteilung:
**18.07.2001 Patentblatt 2001/29**

(51) Int Cl.[7]: **C08K 9/12**

(21) Anmeldenummer: **96810323.4**

(22) Anmeldetag: **22.05.1996**

# (54) Auf Trägermittel fixierte Antioxidantien und Lichtschutzmittel als Füllstoffe und Stabilisatoren

Antioxidants and light stabilizers on carriers as fillers and stabilizers

Antioxydants et photoprotecteurs fixés sur support comme charges et stabilisateurs

(84) Benannte Vertragsstaaten:
**AT BE DE ES FR GB IT NL**

(30) Priorität: **31.05.1995 CH 160395**

(43) Veröffentlichungstag der Anmeldung:
**04.12.1996 Patentblatt 1996/49**

(73) Patentinhaber: **Ciba Specialty Chemicals Holding Inc.**
**4057 Basel (CH)**

(72) Erfinder:
- **Nesvadba, Peter, Dr.**
**1723 Marly (CH)**
- **Kramer, Andreas, Dr.**
**3186 Düdingen (CH)**
- **Steinmann, Alfred, Dr.**
**1724 Praroman (CH)**
- **Zingg, Jürg**
**4153 Reinach (CH)**
- **Müller, Daniel**
**4051 Basel (CH)**

(56) Entgegenhaltungen:
**EP-A- 0 001 631**
**EP-A- 0 041 742**
**US-A- 3 676 168**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft auf Trägermittel fixierte Antioxidantien und Lichtschutzmittel , Zusammensetzungen, enthaltend ein organisches Material, bevorzugt ein Polymer, und die auf Trägermittel fixierten Antioxidantien und Lichtschutzmittel, sowie die Verwendung derselben als Füllstoffe und zum Stabilisieren von organischen Materialien gegen oxidativen, thermischen oder/und lichtinduzierten Abbau.

Die Beimischung von Füllstoffen zu organischen Materialien, insbesondere Polymeren, ist bekannt und beispielsweise in H.S. Katz/J.V. Milewski (Ed.), Handbook of Fillers for Plastics, Van Nostrand Reinhold Publishers, New York 1987; in R. Gächter/H. Müller (Ed.), Plastics Additives Handbook, 3rd Ed., Seiten 525-591, Hanser Publishers, München 1990; und Ullmann's Encyclopedia of Industrial Chemistry, Vol A20, Seiten 494-497, 5th Edition, VCH Verlagsgesellschaft, Weinheim 1987, beschrieben. Die Verwendung von Füllstoffen in Polymeren hat den Vorteil, dass beispielsweise die mechanischen Eigenschaften , insbesondere die Dichte, die Härte, die Steifheit oder die Schlagfestigkeit des Polymeren verbessert werden kann. Weil die Füllstoffe oft billiger sind als die reinen Polymeren, führt der Ersatz eines Teils der teuren reinen Polymere durch Füllstoffe auch zu einer Verbilligung des Polymeren.

Zwecks Verbesserung der Haftung und Verträglichkeit der Füllstoffe mit den organischen Materialien werden die Füllstoffe bevorzugt vor dem Einsatz in die organischen Materialien, bevorzugt Polymeren, mit einer Beschichtung versehen. Wie aus den eingangs erwähnten Literaturstellen, US-A-1 264 092, US-A-1 832 416, US-A-1 832 417, US-A-2 199 710, US-A-2 345 191, US-A-2 374 741, US-A-2 663 695, EP-A-0 038 620, US-A-4 283 316, US-A-4 420 341, US-A-4 795 767, CS-B-208 547 (C.A. 100, 193080r) oder CS-B-225 404 (C.A. 102, 150464t) hervorgeht, erfolgt die Beschichtung der Füllstoffe beispielsweise mit Fettsäuren, insbesondere Stearinsäure oder Palmitinsäure, Kohlenwasserstoffen, Wachsen oder sogenannten "adhesion promoters" wie sie in Kapitel 9.3.5 von R. Gächter/H. Müller (Ed.), Plastics Additives Handbook, 3rd Ed., Seiten 544-546, Hanser Publishers, München 1990 offenbart sind.

EP-A-0 038 620 offenbart die Beschichtung von Füllstoffen mit thermolabilen sauren Schwefelverbindungen, die sich beim Einarbeiten des beschichteten Füllstoffs ins Polymere zu vulkanisationsaktiven Schwefelverbindungen zersetzen.

US-A-4 420 341 offenbart die Beschichtung von Füllstoffen mit oxidationsempfindlichen ungesättigten Fettsäuren, welche mit Antioxidantien stabilisiert werden.

CS-B-208 547 (C.A. 100, 193080r) beschreibt ebenfalls die Beschichtung von Füllstoffen, insbesondere Calciumcarbonat, mit $C_{12}$-$C_{22}$-Fettsäuren und anschliessende Stabilisierung dieser Schicht mit Antioxidantien.

CS-B-225 404 (C.A. 102, 150464t) offenbart die Beschichtung von Mica als Füllstoff für Polypropylen mit Silanen, insbesondere Triethoxyvinylsilan und anschliessende Stabilisierung dieser Schicht mit Antioxidantien wie beispielsweise Thiodipropionsäure-distearylester oder Tris(alkylphenyl)phosphiten.

US-A-3 676 168 offenbart ein Verfahren wie Russ verbessert in einen elastomeren Kunststoff eingearbeitet werden kann, indem der Russ zuerst mit einer bestimmten Gruppe von phenolischen Antioxidantien in Wasser gemischt und dann oxidativ getrocknet wird.

Die bekannten Beschichtungsmittel bzw. "adhesion promoters" genügen nicht in jeder Hinsicht den hohen Anforderungen, die ein Beschichtungsmittel für einen Füllstoff erfüllen soll, der in ein organisches Material, insbesondere Polymer, eingesetzt werden soll.

Eine Beschichtung von Füllstoffen für organische Materialien, insbesondere Polymere, die ausschliesslich aus einem Antioxidans und/oder Lichtschutzmittel besteht, ist in der Literatur nicht offenbart und daher Gegenstand der vorliegenden Anmeldung.

Die Stabilisierung von organischen Materialien, insbesondere Polymeren, mit Antioxidantien aus der Reihe der sterisch gehinderten Phenole ist beispielsweise bekannt aus US-A-3-839 278, US-A-4 032 562, US-A-4 058 502, US-A-4 093 587, US-A-4 132 702. Sterisch gehinderte Amine, darunter insbesondere Verbindungen enthaltend 2,2,6,6-Tetramethylpiperidinylgruppen, finden bevorzugt Einsatz als Lichtschutzmittel ("hindered amine light stabilizers"; HALS).

Es wurde nun gefunden, dass eine ausgewählte Gruppe solcher Antioxidantien aus der Reihe der sterisch gehinderten Phenole , der Thioalkylcarbonsäuren und der Thioalkylcarbonsäureester, sowie eine ausgewählte Gruppe von Lichtschutzmitteln aus der Reihe der sterich gehinderten Amine, sich besonders gut als Stabilisatoren für organische Materialien und gleichzeitig als Beschichtungsmittel für Füllstoffe eignen, die in organischen Materialien, die gegen oxidativen, thermischen oder/und lichtinduzierten Abbau empfindlich sind, eingesetzt werden.

Die vorliegende Erfindung betrifft daher auf Trägermittel fixierte Verbindungen der Formel I, II, III und/oder IV

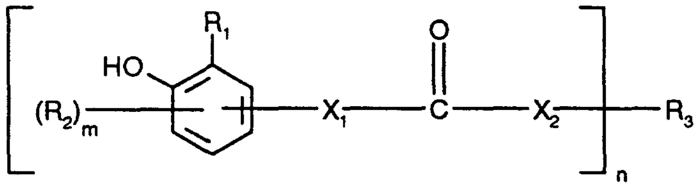

(I)

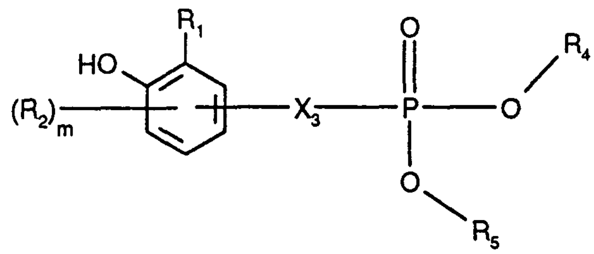

(II)

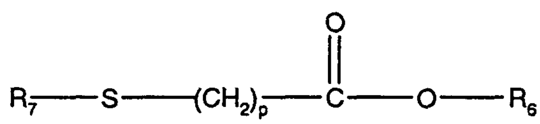

(III)

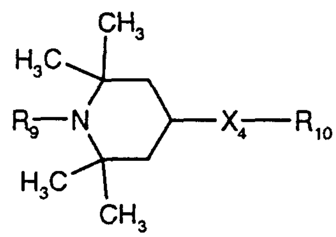

(IV)

worin

$R_1$ $C_1$-$C_{18}$-Alkyl, $C_5$-$C_{12}$-Cycloalkyl, Phenyl oder $C_7$-$C_9$-Phenylalkyl bedeutet,

$R_2$ $C_1$-$C_{18}$-Alkyl, $C_5$-$C_{12}$-Cycloalkyl, Phenyl oder $C_7$-$C_9$-Phenylalkyl darstellt,

$R_4$ Wasserstoff, $C_1$-$C_{20}$-Alkyl, unsubstituiertes oder durch $C_1$-$C_4$-Alkyl substituiertes Phenyl oder Naphthyl; Ammonium oder $\frac{M^{r+}}{r}$ bedeutet,

$R_5$ Wasserstoff, $C_1$-$C_{20}$-Alkyl, unsubstituiertes oder durch $C_1$-$C_4$-Alkyl substituiertes Phenyl oder Naphthyl; Ammonium oder $\frac{M^{r+}}{r}$ darstellt,

$R_6$ Wasserstoff, $C_1$-$C_{18}$-Alkyl, $C_5$-$C_{12}$-Cycloalkyl, $C_7$-$C_9$-Phenylalkyl, Ammonium oder $\frac{M^{r+}}{r}$ bedeutet,

$R_7$ $C_1$-$C_{18}$-Alkyl, unsubstituiertes oder durch $C_1$-$C_4$-Alkyl substituiertes Phenyl; oder $-(CH_2)_q-CO_2R_6$ darstellt,

$R_8$ $C_1$-$C_8$-Alkyl bedeutet,

$R_9$ Wasserstoff, $C_1$-$C_8$-Alkyl, $O^\bullet$, OH, NO, $-CH_2CN$, $C_1$-$C_{18}$-Alkoxy, $C_5$-$C_{12}$-Cycloalkyloxy, $C_3$-$C_6$-Alkenyl, $C_3$-$C_6$-Alkinyl, $C_1$-$C_8$-Acyl, unsubstituiertes oder am Phenylring durch $C_1$-$C_4$-Alkyl substituiertes $C_7$-$C_9$-Phenylalkyl darstellt,

$R_{10}$

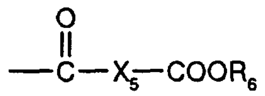 , 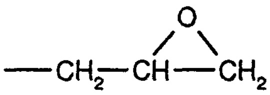

oder $-X_6-COOR_6$ bedeutet,
$R_{11}$ Wasserstoff oder $C_1$-$C_{18}$-Alkyl darstellt,
$R_{12}$ $C_1$-$C_{18}$-Alkyl oder $C_2$-$C_{14}$-Alkenyl bedeutet,
$R_{13}$ Wasserstoff oder $C_1$-$C_4$-Alkyl darstellt,
M ein r-wertiges Metallkation ist,
$X_1$ eine direkte Bindung, $C_1$-$C_8$-Alkylen, durch Sauerstoff oder Schwefel unterbrochenes $C_2$-$C_8$-Alkylen;

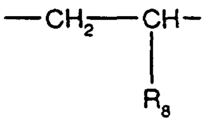 oder 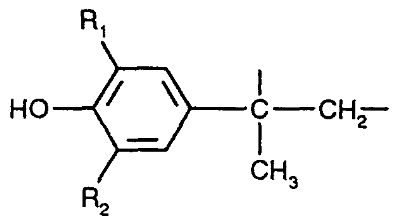

darstellt, wobei $R_1$ und $R_2$ die obige Bedeutung haben,
$X_2$ Sauerstoff oder -NH- bedeutet,
$X_3$ $C_1$-$C_6$-Alkylen darstellt,
$X_4$ Sauerstoff oder $-NR_{11}-$ bedeutet,
$X_5$ eine direkte Bindung, $C_1$-$C_8$-Alkylen, $C_2$-$C_8$-Alkenylen,

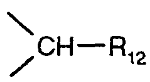 , 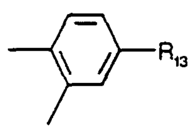 ,

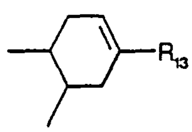 oder 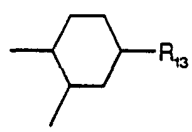

darstellt,
$X_6$ $C_1$-$C_{18}$-Alkylen, $C_2$-$C_{18}$-Alkenylen, durch Sauerstoff oder Schwefel unterbrochenes $C_2$-$C_{18}$-Alkylen; oder Phenylen bedeutet,
m 0, oder 2 darstellt,
n eine ganze Zahl aus dem Bereich von 1 bis 6 bedeutet,
p 1 oder 2 darstellt,
q 1 oder 2 ist,
r 1, 2 oder 3 darstellt, und
wenn n = 1 ist,
$R_3$ Wasserstoff, $C_1$-$C_{25}$-Alkyl, $C_5$-$C_{12}$-Cycloalkyl, unsubstituiertes oder durch $C_1$-$C_4$-Alkyl substituiertes Phenyl; einen einwertigen Rest einer Hexose, einen einwertigen Rest eines Hexitols; und wenn $X_2$ Sauerstoff ist, $R_3$ zusätzlich Ammonium oder $\frac{M^{r+}}{r}$ darstellt, oder
wenn n= 2 ist,
$R_3$ $C_2$-$C_{12}$-Alkylen, durch Sauerstoff oder Schwefel unterbrochenes $C_4$-$C_{12}$-Alkylen; einen zweiwertigen Rest einer Hexose oder einen zweiwertigen Rest eines Hexitols bedeutet, oder

wenn n = 3 ist,
$R_3$

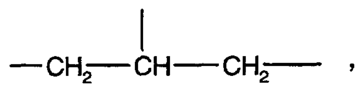

einen dreiwertigen Rest einer Hexose oder einen dreiwertigen Rest eines Hexitols darstellt, oder
wenn n = 4 ist,
$R_3$ $C_4$-$C_{10}$-Alkantetrayl, einen vierwertigen Rest einer Hexose oder einen vierwertigen Rest eines Hexitols bedeutet, oder
wenn n = 5 ist,
$R_3$ einen fünfwertigen Rest einer Hexose oder einen fünfwertigen Rest eines Hexitols darstellt, oder
wenn n = 6 ist,
$R_3$

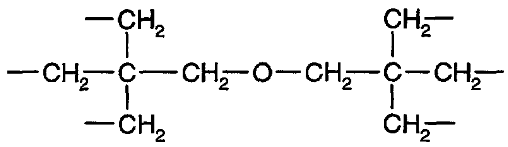

oder einen sechswertigen Rest eines Hexitols bedeutet; und

worin das Trägermittel ein Füllstoff auf Oxid- oder Hydroxid-Basis, Silikat-Basis oder Carbonat-Basis ist.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von $R_1$, $R_2$ und $R_6$ ist beispielsweise $C_1$-$C_{12}$-Alkyl, insbesondere $C_1$-$C_{10}$-Alkyl, z.B. $C_1$-$C_8$-Alkyl. Eine besonders bevorzugte Bedeutung von $R_1$ und $R_2$ ist beispielsweise $C_1$-$C_6$-Alkyl, insbesondere $C_1$-$C_4$-Alkyl, z.B. tert-Butyl. Eine besonders bevorzugte Bedeutung von $R_3$ ist $C_1$-$C_{18}$-Alkyl, insbesondere $C_1$-$C_{12}$-Alkyl. z.B. $C_1$-$C_8$-Alkyl. Eine speziell bevorzugte Bedeutung von $R_3$ ist $C_1$-$C_6$-Alkyl, insbesondere $C_1$-$C_4$-Alkyl, z.B. Methyl. Eine besonders bevorzugte Bedeutung von $R_7$ ist beispielsweise $C_2$-$C_{18}$-Alkyl, insbesondere $C_4$-$C_{14}$-Alkyl, z.B. $C_8$-$C_{14}$-Alkyl. Eine speziell bevorzugte Bedeutung von $R_7$ ist Dodecyl. Eine bevorzugte Bedeutung von $R_2$ und $R_4$ ist $C_1$-$C_{12}$-Alkyl, insbesondere $C_1$-$C_{10}$-Alkyl, z.B. $C_1$-$C_8$-Alkyl. Eine speziell bevorzugte Bedeutung von $R_2$ und $R_4$ ist $C_1$-$C_4$-Alkyl, insbesondere Ethyl. Eine besondere Bedeutung von $R_8$ ist $C_1$-$C_6$-Alkyl, insbesondere $C_1$-$C_4$-Alkyl, z.B. Methyl. Eine besonders bevorzugte Bedeutung von $R_9$ ist bespielsweise $C_1$-$C_6$-Alkyl, insbesondere $C_1$-$C_4$-Alkyl, z. B. Methyl. Eine besonders bevorzugte Bedeutung von $R_{11}$ und $R_{12}$ ist beispielsweise $C_1$-$C_{12}$-Alkyl, insbesondere $C_1$-$C_8$-Alkyl, z.B. $C_1$-$C_4$-Alkyl. Eine besonders bevorzugte Bedeutung von $R_{13}$ ist bespielsweise Methyl, Ethyl, Propyl oder tert-Butyl, insbesondere tert-Butyl und Methyl.

$C_5$-$C_{12}$-Cycloalkyl bedeutet beispielsweise Cyclopentyl, Cyclohexyl, Cycloheptyl, Cyclooctyl, Cyclodecyl oder Cyclododecyl. Eine bevorzugte Bedeutung von $R_1$, $R_2$, $R_3$ und $R_6$ ist beispielsweise $C_5$-$C_8$-Cycloalkyl, insbesondere $C_5$-$C_7$-Cycloalkyl, z.B. Cyclohexyl.

$C_5$-$C_{12}$-Cycloalkyloxy bedeutet beispielsweise Cyclopentyloxy, Cyclohexyloxy, Cycloheptyloxy, Cyclooctyloxy, Cyclodecyloxy oder Cyclododecyloxy. Eine bevorzugte Bedeutung von $R_9$ ist beispielsweise $C_5$-$C_8$-Cycloalkyloxy, insbesondere $C_5$-$C_7$-Cycloalkyloxy, z.B. Cyclohexyloxy.

Alkenyl mit 2 bis 14 Kohlenstoffatomen bedeutet einen verzweigten oder unverzweigten Rest wie beispielsweise Vinyl, Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Eine bevorzugte Bedeutung von $R_9$ ist Propenyl und 2-Butenyl. Eine besonders bevorzugte Bedeutung von $R_{12}$ ist beispielsweise $C_6$-$C_{14}$-Alkenyl, insbesondere $C_8$-$C_{14}$-Alkenyl, z.B. $C_{10}$-$C_{12}$-Alkenyl.

Alkinyl mit 3 bis 6 Kohlenstoffatomen bedeutet einen verzweigten oder unverzweigten Rest wie beispielsweise Propinyl (Propargyl, $-CH_2-C\equiv CH$ ), 2-Butinyl oder 3-Butinyl.

Acyl mit 1 bis 8 Kohlenstoffatomen bedeutet beispielsweise Formyl, Acetyl, Propionyl, Butanoyl, Pentanoyl,

Hexanoyl, Heptanoyl, Octanoyl, Benzoyl, Acryloyl oder Crotonyl. Bevorzugt sind $C_1$-$C_8$-Alkanoyl, $C_3$-$C_8$-Alkenoyl oder Benzoyl, insbesondere Acetyl.

Unsubstituiertes oder am Phenylrest durch $C_1$-$C_4$-Alkyl substituiertes $C_7$-$C_9$-Phenylalkyl, das vorzugsweise 1 bis 3, insbesondere 1 oder 2 verzweigte oder unverzeigte Alkylgruppen-Reste enthält, bedeutet beispielsweise Benzyl, α-Methylbenzyl, α,α-Dimethylbenzyl, 2-Phenylethyl, 2-Methylbenzyl, 3-Methylbenzyl, 4-Methylbenzyl, 2,4-Dimethylbenzyl, 2,6-Dimethylbenzyl oder 4-tert-Butylbenzyl. Benzyl ist bevorzugt.

Alkenylen mit 2 bis 18 Kohlenstoffatomen bedeutet einen verzweigten oder unverzweigten Rest wie beispielsweise Vinylen, Methylvinylen, Octenylethylen oder Dodecenylethylen. Eine bevorzugte Bedeutung von $X_5$ ist beispielsweise $C_2$-$C_6$-Alkenylen, insbesondere $C_2$-$C_4$-Alkenylen, z.B. Vinylen. Eine bevorzugte Bedeutung von $X_6$ ist beispielsweise $C_2$-$C_{12}$-Alkenylen, insbesondere $C_2$-$C_8$-Alkenylen, z.B. $C_2$-$C_6$-Alkenylen.

Durch $C_1$-$C_4$-Alkyl substituiertes Phenyl oder Naphthyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl, 2,6-Diethylphenyl, 1-Methylnaphthyl, 2-Methylnaphthyl, 4-Methylnaphthyl, 1,6-Dimethylnaphthyl oder 4-tert-Butylnaphthyl.

Ammonium bedeutet $NH_4^+$.

Ein ein-, zwei- oder drei-wertiges Metallkation ist vorzugsweise ein Alkalimetall-, Erdalkalimetall- oder Aluminium-Kation, beispielsweise $Na^+$, $K^+$, $Mg^{++}$, $Ca^{++}$ oder $Al^{+++}$.

$C_1$-$C_{12}$-Alkylen bedeutet einen verzweigten oder unverzweigten Rest wie beispielsweise Methylen, Ethylen, Propylen, Tetramethylen, Pentamethylen, Hexamethylen, Heptamethylen, Octamethylen, Decamethylen oder Dodecamethylen. Eine bevorzugte Bedeutung von $R_3$ ist beispielsweise $C_2$-$C_{12}$-Alkylen, insbesondere $C_2$-$C_{10}$-Alkylen, z. B. $C_2$-$C_8$-Alkylen. Eine bevorzugte Bedeutung von $X_1$ ist beispielsweise $C_1$-$C_6$-Alkylen, insbesondere $C_1$-$C_4$-Alkylen, z.B. $C_2$-$C_4$-Alkylen. Eine speziell bevorzugte Bedeutung von $X_1$ ist Ethylen und Propylen. Eine bevorzugte Bedeutung von $X_3$ ist beispielsweise $C_1$-$C_5$-Alkylen, insbesondere $C_1$-$C_4$-Alkylen, z.B. Methylen. Eine bevorzugte Bedeutung von $X_5$ ist beispielsweise $C_1$-$C_6$-Alkylen, insbesondere $C_1$-$C_4$-Alkylen, z.B. Ethylen. Eine bevorzugte Bedeutung von $X_6$ ist $C_1$-$C_{12}$-Alkylen, insbesondere $C_1$-$C_8$-Alkylen, z.B. $C_1$-$C_4$-Alkylen, insbesondere Methylen.

Durch Sauerstoff oder Schwefel unterbrochenes $C_2$-$C_{18}$-Alkylen kann ein- oder mehrfach unterbrochen sein und bedeutet beispielsweise $-CH_2-O-CH_2-$, $-CH_2-S-CH_2-$, $-CH_2-O-CH_2CH_2-O-CH_2-$, $-CH_2CH_2-O-CH_2CH_2-O-CH_2CH_2-$, $-CH_2-(O-CH_2CH_2-)_2O-CH_2-$, $-CH_2CH_2-(O-CH_2CH_2-)_2O-CH_2CH_2-$, $-CH_2-(O-CH_2CH_2-)_3O-CH_2-$, $-CH_2CH_2-O-CH_2CH_2-$, $-CH_2CH_2-(O-CH_2CH_2-)_3O-CH_2CH_2-$ oder $-CH_2CH_2-S-CH_2CH_2-$. Eine bevorzugte Bedeutung von $R_3$ ist beispielsweise durch Sauerstoff oder Schwefel unterbrochenes $C_2$-$C_{10}$-Alkylen, insbesondere durch Sauerstoff unterbrochenes $C_4$-$C_{10}$-Alkylen, z.B. durch Sauerstoff unterbrochenes $C_4$-$C_8$-Alkylen. Eine bevorzugte Bedeutung von $X_1$ ist beispielsweise durch Sauerstoff oder Schwefel unterbrochenes $C_2$-$C_6$-Alkylen, insbesondere durch Schwefel unterbrochenes $C_2$-$C_6$-Alkylen, z.B. durch Schwefel unterbrochenes $C_2$-$C_4$-Alkylen. Eine speziell bevorzugte Bedeutung von $X_1$ ist $-CH_2-S-CH_2-$. Eine bevorzugte Bedeutung von $X_6$ ist beispielsweise durch Sauerstoff unterbrochenes $C_2$-$C_{12}$-Alkylen, insbesondere durch Sauerstoff unterbrochenes $C_2$-$C_6$-Alkylen, z.B. $-CH_2CH_2-O-CH_2CH_2-$,

Phenylen bedeutet beispielsweise 1,4-Phenylen, 1,3-Phenylen oder 1,2-Phenylen. 1,2-Phenylen ist bevorzugt.

Bedeutet $R_3$ für n = 1 bis 6 einen n-wertigen Rest einer Hexose, so leitet sich dieser z.B. von Allose, Altrose, Glucose, Mannose, Gulose, Idose, Galaktose oder Talose ab, d.h. um die entsprechenden Verbindungen der Formel I zu erhalten, müssen eine, zwei, drei, vier, fünf oder sechs OH-Gruppen durch die Estergruppe E-1,

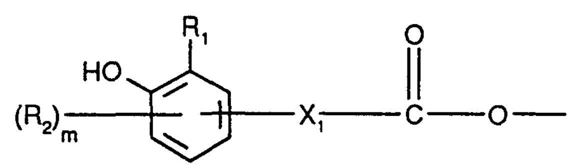

(E-1)

worin $R_1$, $R_2$, m und $X_1$ die oben angegebenen Bedeutungen haben, ersetzt werden. So kann $R_3$ beispielsweise für n = 5 eine Gruppe

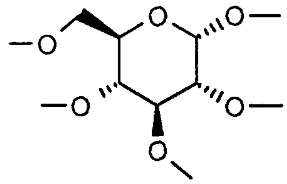

bedeuten.

Stellt $R_3$ den n-wertigen Rest eines Hexitols dar, so erhält man die entsprechenden Verbindungen der Formel I, indem n OH-Gruppen in den Hexitolen durch die oben angegebene Estergruppe E-1 ersetzt werden. $R_3$ kann als sechswertiger Rest eines Hexitols beispielsweise

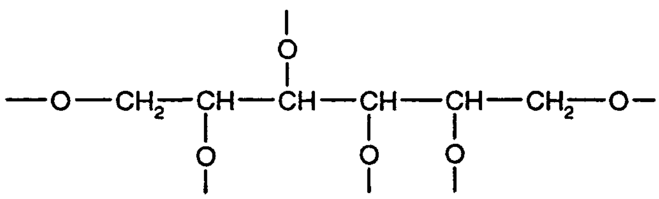

sein. Diese Gruppe leitet sich von dem D-Sorbitol ab.

Alkantetrayl mit 4 bis 10 Kohlenstoffatomen bedeutet beispielsweise

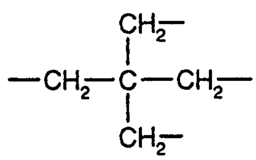

(Pentaerythrityl),

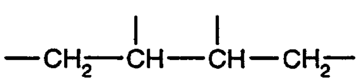 , 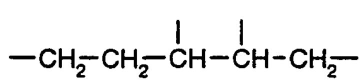 ,

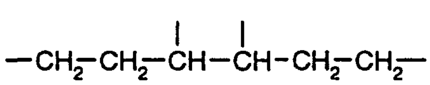 , 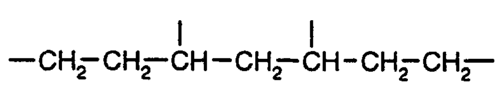

oder

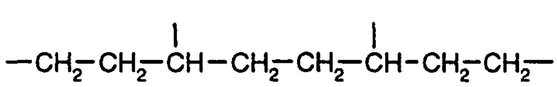 .

Bevorzugt ist Pentaerythrityl.

Von Interesse sind auf Trägermittel fixierte Verbindungen der Formel I, II und/oder III.

Bevorzugt sind auf Trägermittel fixierte Verbindungen der Formel I, II und/oder III, worin

$R_1$ $C_1$-$C_{12}$-Alkyl, $C_5$-$C_8$-Cycloalkyl, Phenyl oder $C_7$-$C_9$-Phenylalkyl bedeutet,
$R_2$ $C_1$-$C_{12}$-Alkyl, $C_5$-$C_8$-Cycloalkyl, Phenyl oder $C_7$-$C_9$-Phenylalkyl darstellt,
$R_4$ Wasserstoff, $C_1$-$C_{12}$-Alkyl, unsubstituiertes oder durch $C_1$-$C_4$-Alkyl substituiertes Phenyl; Ammonium oder $\frac{M^{r+}}{r}$ bedeutet,
$R_5$ Wasserstoff, $C_1$-$C_{12}$-Alkyl, unsubstituiertes oder durch $C_1$-$C_4$-Alkyl substituiertes Phenyl; Ammonium oder $\frac{M^{r+}}{r}$ darstellt,
$R_6$ Wasserstoff, $C_1$-$C_{12}$-Alkyl, $C_5$-$C_8$-Cycloalkyl, $C_7$-$C_9$-Phenylalkyl, Ammonium oder $\frac{M^{r+}}{r}$ bedeutet,
$R_7$ $C_2$-$C_{16}$-Alkyl, unsubstituiertes oder durch $C_1$-$C_4$-Alkyl substituiertes Phenyl; oder $-(CH_2)_q-CO_2R_6$ darstellt,
$R_8$ $C_1$-$C_4$-Alkyl bedeutet,
M ein Alkalimetall, Erdalkalimetall oder Aluminium ist,
$X_1$ eine direkte Bindung, $C_1$-$C_6$-Alkylen, durch Sauerstoff oder Schwefel unterbrochenes $C_2$-$C_6$-Alkylen;

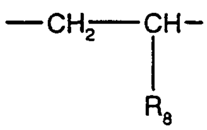

oder

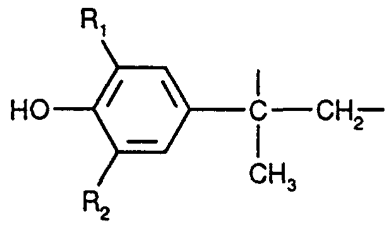

darstellt, wobei $R_1$ und $R_2$ die obige Bedeutung haben,
$X_2$ Sauerstoff oder -NH- bedeutet,
$X_3$ $C_1$-$C_5$-Alkylen darstellt,
m 1 oder 2 bedeutet,
n eine ganze Zahl aus dem Bereich von 1 bis 4 darstellt,
p 1 oder 2 bedeutet,
q 1 oder 2 ist,
r 1, 2 oder 3 darstellt, und
wenn n = 1 ist,
$R_3$ Wasserstoff, $C_1$-$C_{18}$-Alkyl, $C_5$-$C_8$-Cycloalkyl, unsubstituiertes oder durch $C_1$-$C_4$-Alkyl substituiertes Phenyl; und wenn $X_2$ Sauerstoff ist, $R_3$ zusätzlich Ammonium oder $\frac{M^{r+}}{r}$ darstellt, oder
wenn n= 2 ist,
$R_3$ $C_2$-$C_{10}$-Alkylen, durch Sauerstoff oder Schwefel unterbrochenes $C_4$-$C_{10}$-Alkylen bedeutet, oder
wenn n = 3 ist,
$R_3$

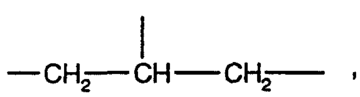

darstellt, oder
wenn n = 4 ist,
$R_3$ $C_4$-$C_8$-Alkantetrayl bedeutet.

Besonders bevorzugt sind auf Trägermittel fixierte Verbindungen der Formel I, II und/oder III, worin

$R_1$ $C_1$-$C_{10}$-Alkyl, $C_5$-$C_6$-Cycloalkyl, Phenyl oder Benzyl bedeutet,
$R_2$ $C_1$-$C_{10}$-Alkyl, $C_5$-$C_6$-Cycloalkyl, Phenyl oder Benzyl darstellt,
$R_4$ Wasserstoff, $C_1$-$C_{10}$-Alkyl, Phenyl, Ammonium oder $\frac{M^{r+}}{r}$ bedeutet, $R_5$ Wasserstoff, $C_1$-$C_{10}$-Alkyl, Phenyl, Ammonium oder $\frac{M^{r+}}{r}$ darstellt,

$R_6$ Wasserstoff, $C_1$-$C_{10}$-Alkyl, $C_5$-$C_6$-Cycloalkyl, Benzyl, Ammonium oder $\frac{M^{r+}}{r}$ bedeutet,
$R_7$ $C_4$-$C_{14}$-Alkyl, Phenyl oder $-(CH_2)_q-CO_2R_6$ darstellt,
$R_8$ Methyl bedeutet,
M ein Alkalimetall, Erdalkalimetall oder Aluminium ist,
$X_1$ eine direkte Bindung, $C_1$-$C_4$-Alkylen, durch Schwefel unterbrochenes $C_2$-$C_6$-Alkylen;

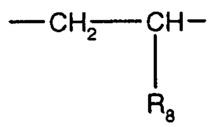
oder
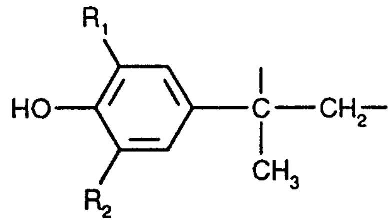

darstellt, wobei $R_1$ und $R_2$ die obige Bedeutung haben,
$X_2$ Sauerstoff bedeutet,
$X_3$ $C_1$-$C_4$-Alkylen darstellt,
m 1 oder 2 bedeutet,
n eine ganze Zahl aus dem Bereich von 1 bis 4 darstellt,
p 2 bedeutet,
q 2 ist,
r 1, 2 oder 3 darstellt, und
wenn n = 1 ist,
$R_3$ Wasserstoff, $C_1$-$C_{12}$-Alkyl, $C_5$-$C_6$-Cycloalkyl, Phenyl, Ammonium oder $\frac{M^{r+}}{r}$ darstellt, oder
wenn n= 2 ist,
$R_3$ $C_2$-$C_8$-Alkylen, durch Sauerstoff unterbrochenes $C_4$-$C_{10}$-Alkylen bedeutet, oder
wenn n = 3 ist,
$R_3$

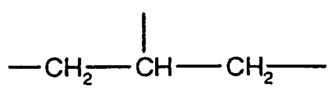
,

darstellt, oder
wenn n = 4 ist,
$R_3$

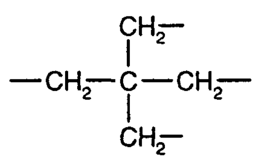

bedeutet.

Ebenfalls besonders bevorzugt sind auf Trägermittel fixierte Verbindungen der Formel I, II und/oder III, worin

$R_1$ tert-Butyl bedeutet,
$R_2$ $C_1$-$C_4$-Alkyl darstellt und in ortho Stellung zur OH- Gruppe gebunden ist, und m 1 bedeutet.

Speziell von Interesse sind auf Trägermittel fixierte Verbindungen der Formel IV, worin $R_9$ Wasserstoff, Methyl, $C_8$-$C_{12}$-Alkoxy, Cyclohexyloxy oder Benzyl darstellt.

Bevorzugt sind auch auf Trägermittel fixierte Verbindungen der Formel IV, worin

$R_6$ Wasserstoff, $C_1$-$C_{10}$-Alkyl, $C_5$-$C_6$-Cycloalkyl, Benzyl, Ammonium oder $\frac{M^{r+}}{r}$ bedeutet,
$R_9$ Wasserstoff, $C_1$-$C_4$-Alkyl, $O^{\bullet}$, OH, NO, $C_4$-$C_{18}$-Alkoxy, $C_5$-$C_7$-Cycloalkoxy, $C_2$-$C_6$-Acyl, unsubstituiertes oder am Phenylring durch $C_1$-$C_4$-Alkyl substituiertes $C_7$-$C_9$-Phenylalkyl darstellt,
$R_{10}$

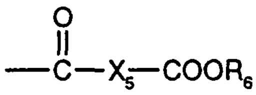 , 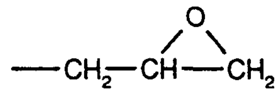

oder $-X_6-COOR_6$ bedeutet,
$R_{11}$ Wasserstoff oder $C_1$-$C_{12}$-Alkyl darstellt,
$R_{12}$ $C_1$-$C_{12}$-Alkyl oder $C_6$-$C_{14}$-Alkenyl bedeutet,
$R_{13}$ Wasserstoff oder Methyl darstellt,
M ein Alkalimetall oder Erdalkalimetall ist,
$X_4$ Sauerstoff oder $-NR_{11}-$ bedeutet,
$X_5$ eine direkte Bindung, $C_1$-$C_6$-Alkylen, $C_2$-$C_6$-Alkenylen,

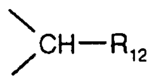 , 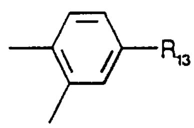 ,

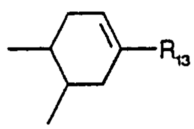 oder 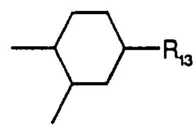

darstellt,
$X_6$ $C_1$-$C_{12}$-Alkylen, $C_2$-$C_{12}$-Alkenylen, durch Sauerstoff unterbrochenes $C_2$-$C_{12}$-Alkylen; oder Phenylen bedeutet, und
r 1 oder 2 darstellt.

Bevorzugt sind auch auf Trägermittel fixierte Verbindungen der Formel IV, worin

$R_6$ Wasserstoff, $C_1$-$C_8$-Alkyl, Cyclohexyl oder $\frac{M^{r+}}{r}$ bedeutet,
$R_9$ Wasserstoff, $C_1$-$C_4$-Alkyl, $C_4$-$C_{18}$-Alkoxy, $C_5$-$C_7$-Cycloalkoxy, $C_2$-$C_6$-Acyl oder $C_7$-$C_9$-Phenylalkyl darstellt,
$R_{10}$

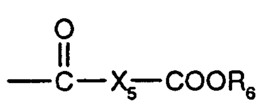 , 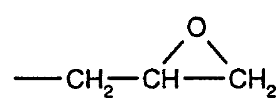

oder $-X_6-COOR_6$ bedeutet,
$R_{11}$ Wasserstoff oder $C_1$-$C_8$-Alkyl darstellt,
$R_{12}$ $C_1$-$C_8$-Alkyl oder $C_6$-$C_{14}$-Alkenyl bedeutet,
$R_{13}$ Wasserstoff oder Methyl darstellt,
M ein Alkalimetall oder Erdalkalimetall ist,
$X_4$ Sauerstoff oder $-NR_{11}-$ bedeutet,
$X_5$ eine direkte Bindung, $C_1$-$C_6$-Alkylen,

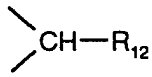 , 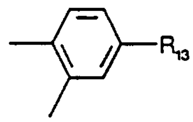 , 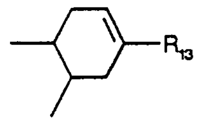

oder

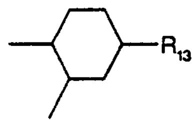

darstellt,
$X_6$ $C_1$-$C_8$-Alkylen, $C_2$-$C_8$-Alkenylen, durch Sauerstoff unterbrochenes $C_2$-$C_8$-Alkylen; oder Phenylen bedeutet, und
r 1 oder 2 darstellt.

Von besonderem Interesse sind auf Trägermittel fixierte Verbindungen der Formel I, II, III und/oder IV, worin

$R_1$ $C_1$-$C_6$-Alkyl, Cyclohexyl oder Phenyl bedeutet,
$R_2$ $C_1$-$C_6$-Alkyl, Cyclohexyl oder Phenyl darstellt und in ortho Stellung zur OH-Gruppe gebunden ist,
$R_3$ Wasserstoff, $C_1$-$C_8$-Alkyl, Cyclohexyl oder $\frac{M^{r+}}{r}$ ist,
$R_4$ Wasserstoff, $C_1$-$C_8$-Alkyl oder $\frac{M^{r+}}{r}$ bedeutet,
$R_5$ Wasserstoff, $C_1$-$C_8$-Alkyl oder $\frac{M^{r+}}{r}$ darstellt,
$R_6$ Wasserstoff, $C_1$-$C_8$-Alkyl, Cyclohexyl oder $\frac{M^{r+}}{r}$ bedeutet,
$R_7$ $C_8$-$C_{14}$-Alkyl oder $-(CH_2)_q-CO_2R_6$ darstellt,
$R_8$ Methyl bedeutet,
$R_9$ Wasserstoff, $C_1$-$C_4$-Alkyl, $C_4$-$C_{12}$-Alkoxy, $C_5$-$C_7$-Cycloalkoxy, Acetyl oder $C_7$-$C_9$-Phenylalkyl darstellt,
$R_{10}$

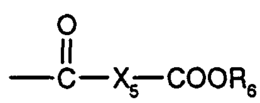 , 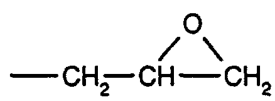

oder $-X_6-COOR_6$ bedeutet,
$R_{11}$ Wasserstoff oder $C_1$-$C_4$-Alkyl darstellt,
$R_{12}$ $C_8$-$C_{14}$-Alkenyl bedeutet,
$R_{13}$ Wasserstoff oder Methyl darstellt,
M ein Alkalimetall oder Erdalkalimetall ist,
$X_1$ $C_2$-$C_4$-Alkylen, durch Schwefel unterbrochenes $C_2$-$C_4$-Alkylen; oder

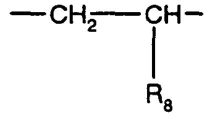

darstellt,
$X_2$ Sauerstoff bedeutet,
$X_3$ $C_1$-$C_4$-Alkylen darstellt,
$X_4$ Sauerstoff oder $-NR_{11}-$ bedeutet,

$X_5$ eine direkte Bindung, $C_1$-$C_4$-Alkylen,

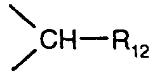 , 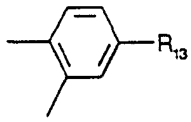 , 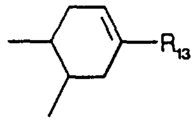

oder

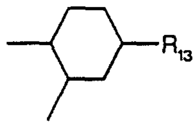

darstellt,
$X_6$ $C_1$-$C_4$-Alkylen oder Phenylen bedeutet,
m 1 oder 2 darstellt,
n 1 ist,
p 2 bedeutet,
q 2 ist, und
r 1 oder 2 darstellt.

Speziell von Interesse sind auf Trägermittel fixierte Verbindungen der Formel I, II, III und/oder IV, worin

$R_1$ tert-Butyl bedeutet,
$R_2$ $C_1$-$C_4$-Alkyl darstellt und in ortho Stellung zur OH-Gruppe gebunden ist,
$R_3$ Wasserstoff oder $C_1$-$C_4$-Alkyl darstellt,
$R_4$ Wasserstoff, $C_1$-$C_4$-Alkyl oder $\frac{M^{r+}}{r}$ bedeutet,
$R_5$ Wasserstoff, $C_1$-$C_4$-Alkyl oder $\frac{M^{r+}}{r}$ darstellt,
$R_6$ Wasserstoff bedeutet,
$R_7$ $C_{10}$-$C_{12}$-Alkyl darstellt,
$R_9$ Wasserstoff, Methyl, $C_8$-$C_{12}$-Alkoxy, Cyclohexyloxy oder Benzyl darstellt,
$R_{10}$

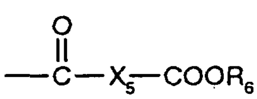 , 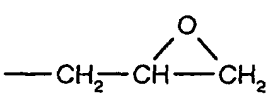

oder $—X_6—COOR_6$ bedeutet,
$R_{11}$ Wasserstoff darstellt,
$R_{12}$ $C_{10}$-$C_{12}$-Alkenyl bedeutet,
M Calcium darstellt,
$X_1$ Ethylen oder durch Schwefel unterbrochenes Ethylen bedeutet,
$X_2$ Sauerstoff darstellt,
$X_3$ Methylen bedeutet,
$X_4$ Sauerstoff oder $-NR_{11}-$ darstellt,
$X_5$ Ethylen oder $>CH—R_{12}$ bedeutet,
$X_6$ Methylen darstellt,
m 1 bedeutet,
n 1 ist,
p 2 darstellt, und
r 2 bedeutet.

Ganz besonders bevorzugt sind die auf Trägermittel fixierten Verbindungen der Formel Ia, Ib, Ic, IIa, IIb, IIIa

und IVa bis IVn.

(Ia) 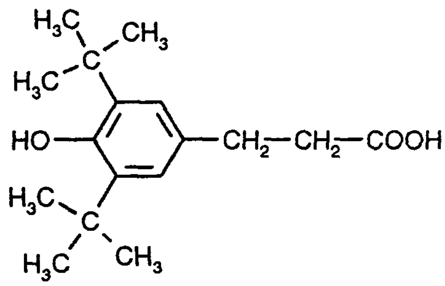

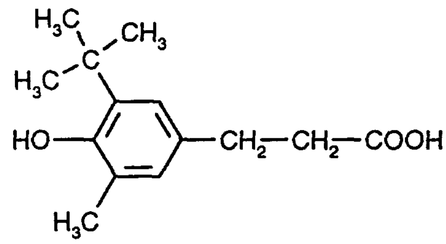 (Ib)

(Ic) 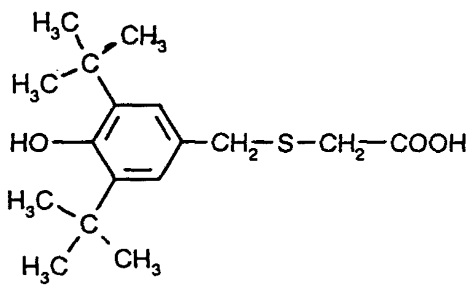

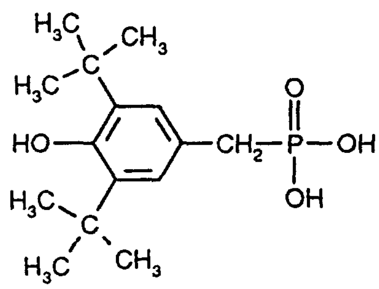 (IIa)

(IIb) 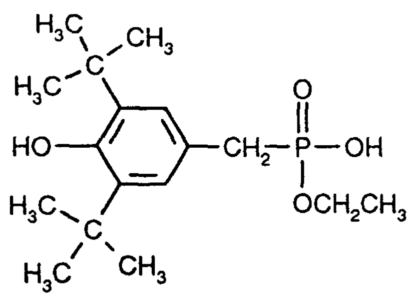

$C_{12}H_{25}-S-CH_2-CH_2-COOH$ (IIIa)

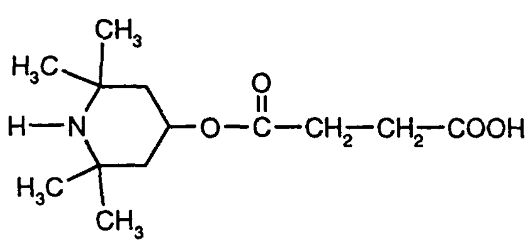

(IVa)

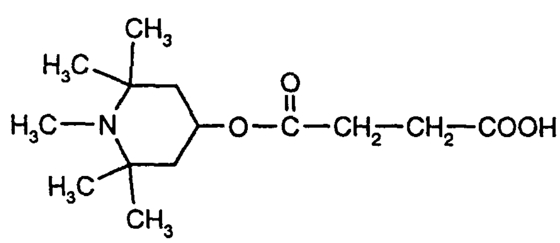

(IVb)

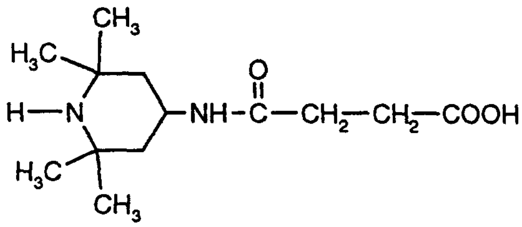

(IVc)

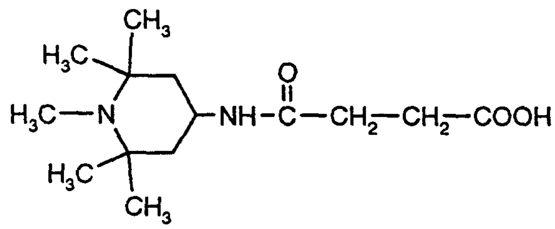

(IVd)

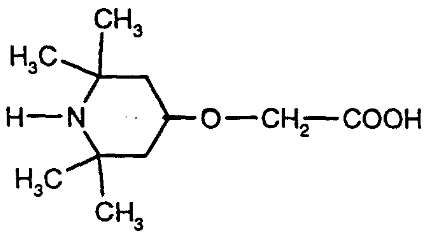

(IVe)

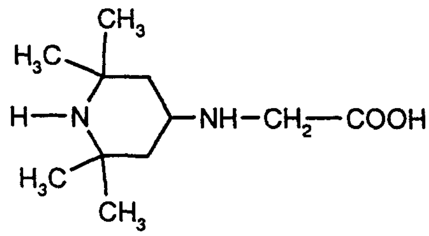

(IVf)

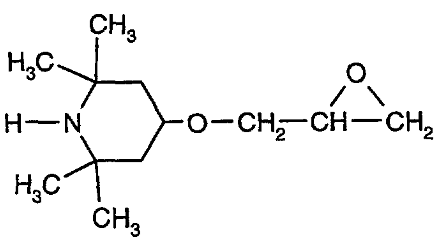

(IVg)

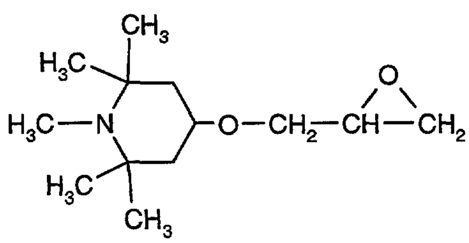

(IVh)

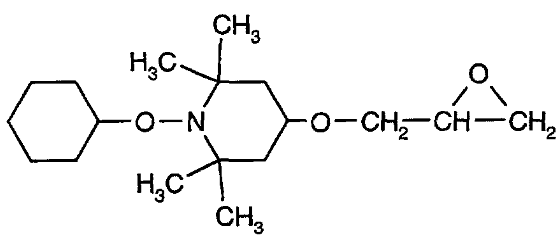

(IVi)

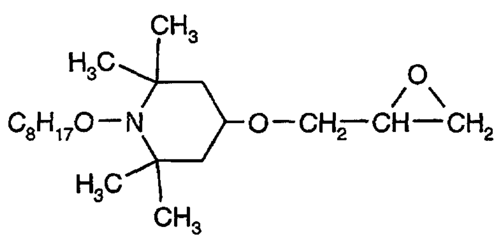

(IVk)

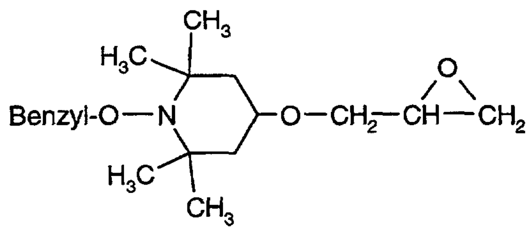

(IVm)

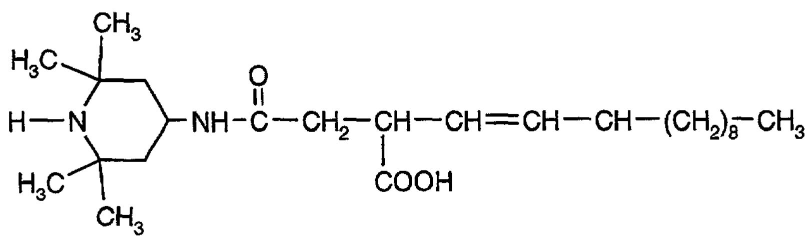

(IVn)

Die bevorzugten Füllstoffe sind in H.S. Katz/J.V. Milewski (Ed.), Handbook of Fillers for Plastics, Van Nostrand Reinhold Publishers, New York 1987; in R. Gächter/H. Müller (Ed.), Plastics Additives Handbook, 3rd Ed., Seiten 525-591, Hanser Publishers, München 1990; und Ullmann's Encyclopedia of Industrial Chemistry, Vol A20, Seiten 494-497, 5th Edition, VCH Verlagsgesellschaft, Weinheim 1987, beschrieben.
Speziell bevorzugt sind säure-reaktive Füllstoffe, welche mit den Verbindungen der Formel I, II, III und/oder IV eine Säure/Base Reaktion oder eine Adsorptionsreaktion eingehen können.
Bevorzugt sind auch Füllstoffe, die mit Epoxiden reagieren und chemische Bindungen bilden können.
Die erfindungsgemässen auf Trägermittel fixierten Verbindungen der Formel I, II, III und/oder IV haben deshalb auch den Vorteil, dass die Verbindungen der Formel I, II, III, und/oder IV gut auf dem Trägermittel haften und nicht sehr leicht mit einem Lösungsmittel wie beispielsweise Alkohol oder Kohlenwasserstoff extrahierbar sind.
Besonders bevorzugt sind die Verbindungen der Formel I, II, III und/oder IV, die mindestens eine freie Carbonsäure, eine freie Phosphonsäure oder ein endständiges Epoxid im Molekül tragen.
Füllstoffe auf Oxid- oder Hydroxid-Basis bedeuten beispielsweise Aluminiumoxid, Magnesiumoxid Titanoxid, Siliciumoxid, Zinkoxid, Aluminiumhydroxid, Magnesiumhydroxid oder Zinkhydroxid.
Füllstoffe auf Silikat-Basis bedeuten beispielsweise Quarzmehl, Kieselgur, Talk, Aluminiumsilikat, Magnesiumsilikat, Calciumsilikat oder Zeolith.
Füllstoffe auf Carbonat-Basis bedeuten beispielsweise Calciumcarbonat, Magnesiumcarbonat oder Dolomit sowie deren unterschiedlichen mineralogischen Formen wie beispielsweise Calcit, Kreide oder Aragonit.
Von speziellem Interesse sind auch auf Trägermittel fixierte Verbindungen der Formel I, II, III und/oder IV, worin das Trägermittel Aluminiumoxid, Magnesiumoxid,Titanoxid, Siliciumoxid, Talk, Calciumcarbonat oder Dolomit ist.
Speziell bevorzugt sind die auf Calciumcarbonat, Titanoxid oder Siliciumoxid fixierten Verbindungen der Formel Ia, Ib, Ic, IIa, IIb, IIIa und IVa bis IVn.
Unter dem allgemeinen Begriff "auf Trägermittel fixierte Verbindungen der Formel I, II, III und/oder IV" wird beispielsweise auch "auf Trägermittel absorbierte oder adsorbierte Verbindungen der Formel I, II, III und/oder IV" verstanden.
Die Fixierung von organischen Verbindungen auf Trägermittel, beziehungsweise die Beschichtung von Füllstoffen mit organischen Verbindungen, ist bekannt und beispielsweise in US-A-4 283 316 (Kolonne 3) beschrieben.
Die erfindungsgemässen auf Trägermittel fixierten Verbindungen der Formel I, II, III und/oder IV können beispielsweise folgendermassen hergestellt werden: Die Verbindungen der Formel I, II, III und/oder IV werden, sofern sie nicht schon flüssig sind, in einem organischen Lösungsmittel wie beispielsweise Ketonen, Estem, Alkoholen oder Kohlenwasserstoffen, insbesondere beispielsweise Aceton, Ethylacetat oder Ethanol gelöst. Zur klaren Lösung wird anschliessend unter Rühren das Trägermittel gegeben. Danach wird das Lösungsmittel destillativ entfernt, bevorzugt unter leichtem Vakuum und in einem Temperaturbereich von 20 bis 200°C. Der trockene Rückstand liefert die erfindungsgemässen auf Trägermittel fixierten Verbindungen der Formel I, II, III und/oder IV in quantitativer Ausbeute.

Das eingesetzte Lösungsmittel wird bezüglich der eingesetzten Verbindung der Formel I, II, III und/oder IV zweckmässig in einem 2 bis 20 fachen, bevorzugt 4 bis 15 fachen, insbesondere 10 fachen, Gewichtsüberschuss verwendet.

Handelt es sich bei den Verbindungen der Formel I, II, III und/oder IV um Säuren, wie beispielsweise Carbonsäuren oder Phosphonsäuren, können diese Verbindungen auch in einem wässrigen basischen Lösungsmittel wie beispielsweise verdünnter Alkalihydroxid-, Erdalkalihydroxid- oder Ammoniak-Lösung, insbesondere Natriumhydroxid-Lösung, gelöst werden. Diese Lösung wird bevorzugt bei leicht erhöhter Temperatur zu einer wässrigen Suspension des Füllstoffs gegeben. Eine bevorzugte Reaktionstemperatur liegt zwischen 30 und 100° C, insbesondere 30 und 80° C, z.B. 40 und 70° C. Die Isolierung der auf Trägermittel fixierten Verbindungen der Formel I, II, III und/oder IV erfolgt bevorzugt durch Filtration des Reaktionsgemisches und anschliessender Trocknung des Rückstandes am Vakuum.

Die erfindungsgemässen auf Trägermittel fixierten Verbindungen der Formel I, II, III und/oder IV werden zweckmässig ohne Lösungsmittel hergestellt. Die Verbindungen der Formel I, II, III und/oder IV werden dabei in einem Mischer mit dem Trägermittel so lange intensiv gerührt, bis sich das Gemisch auf eine ca. 20°C über dem Schmelzpunt des Trägermittels liegende Temperatur erwärmt hat. Mit beispielsweise Calciumcarbonat als Trägermittel werden dabei Temperaturen von ca. 150°C erreicht. Je grobkörniger das Trägermittel ist, desto schneller wird die Beschichtungstemperatur durch die Friktionswärme erreicht. So steigt beispielsweise die Temperatur von Calciumcarbonat (Millicarb® ) bei einer Rührgeschwindigkeit von ca. 4000 Umdrehungen pro Minute in 8 Minuten auf ca. 100°C. Wird mit einem andern Trägermittel die gewünschte Temperatur so nicht erreicht, wird das Trägermittel beispielsweise vor der Mischung mit den Verbindungen der Formel I, II, III und/oder IV in einem Trockenschrank vorgeheizt.

Die erfindungsgemässen auf Trägermittel fixierten Verbindungen der Formel I, II; III und/oder IV enthalten die Verbindungen der Formel I, II, III und/oder IV beispielsweise in einer Menge von 0,01 bis 10 Gew.-%, vorzugsweise 0,01 bis 5 Gew.-%, z.B. 0,10 bis 2 Gew.-%, bezüglich des Gewichts des Trägermittels.

Die Verbindungen der Formel I, II, III und IV können entweder alleine oder als Gemisch von verschiedenen Verbindungen der Formel I, II, III und/oder IV auf das Trägermittel fixiert werden. Die zu beschichtenden Trägermittel, insbesondere Füllstoffe, können ebenfalls rein oder als Gemische von verschiedenen Trägermittel eingesetzt werden.

Die Verbindungen der Formel I, II und/oder III sind bekannt und teilweise im Handel erhältlich oder können wie in T.H. Coffield et al., J. Amer. Chem. Soc. 79, 5019 (1957); US-A-3 270 091; G. Scott et al., Polymer Degradation and Stability 4, 279 (1982) und EP-A-413 562 beschrieben, analog hergestellt werden.

Die Verbindungen der Formel IV sind teilweise bekannt und teilweise im Handel erhältlich oder können wie in EP-A-0 634 449 beschrieben, analog hergestellt werden.

Die erfindungsgemässen auf Trägermittel fixierten Verbindungen der Formel I, II, III und/oder IV eignen sich als Füllstoffe und zum Stabilisieren von organischen Materialien gegen oxidativen, thermischen und/oder lichtinduzierten Abbau.

Beispiele für derartige Materialien sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).

   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:

   a) radikalisch (gewöhnlich bei hohem Druck und hoher Temperatur).

   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder $\pi$- oder $\sigma$-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

4. Kohlenwasserstoffharze (z.B. $C_5$-$C_9$) inklusive hydrierte Modifikationen davon (z.B. Klebrigmacherharze) und Mischungen von Polyalkylenen und Stärke.

5. Polystyrol, Poly-(p-methylstyrol), Poly-($\alpha$-methylstyrol).

6. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

7. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.

8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

9. Polymere, die sich von $\alpha,\beta$-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.

10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

12. Homo- und Copolymere von cyclischen Ethern, wie Polyalkylenglykole, Polyethylenoxyd, Polypropylenoxyd oder deren Copolymere mit Bisglycidylethem.

13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

14. Polyphenylenoxide und -sulfide und deren Mischungen mit Styrolpolymeren oder Polyamiden.

15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM("RIM-Polyamidsysteme").

17. Polyharnstoffe, Polyimide, Polyamid-imide, Polyetherimide, Polyesterimide, Polyhydantoine und Polybenzimidazole.

18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

19. Polycarbonate und Polyestercarbonate.

20. Polysulfone, Polyethersulfone und Polyetherketone.

21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

22. Trocknende und nicht-trocknende Alkydharze.

23. Ungesättigte Polyesterharze, die sich von Copolyestern gsättigter und ungesättigter Dicarbonsäuren mit mehrwertigen Alkoholen, sowie Vinylverbindungen als Vemetzungsmittel ableiten, wie auch deren halogenhaltige, schwerbrennbare Modifikationen.

24. Vernetzbare Acrylharze, die sich von substituierten Acrylsäureestern ableiten, wie z.B. von Epoxyacrylaten, Urethan-acrylaten oder Polyester-acrylaten.

25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.

26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigem vernetzt werden.

27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

30. Wässrige Emulsionen natürlicher oder synthetischer Kautschuke, wie z.B. Naturkautschuk-Latex oder Latices von carboxylierten Styrol-Butadien-Copolymeren.

31. Erdöl- und Kohle-Destillations-Rückstände, wie z.B. Asphalt, Bitumen oder bituminöse Massen für Strassenbeläge.

Weitere Gegenstände der Erfindung sind daher auch Zusammensetzungen enthaltend (a) ein dem oxidativen, thermischen oder lichtinduzierten Abbau unterworfenes organisches Material und (b) mindestens eine auf Trägermittel fixierte Verbindung der Formel I, II, III und/oder IV.

Vorzugsweise handelt es sich bei den zu schützenden organischen Materialien um natürliche, halbsynthetische oder bevorzugt synthetische Polymere. Besonders bevorzugt sind thermoplastische Polymere, insbesondere PVC oder Polyolefine, vor allem Polyethylen und Polypropylen.

Bei den zu schützenden organischen Materialien handelt es sich vorzugsweise auch um Asphalt, Bitumen oder bituminöse Massen für Strassenbeläge, sowie um natürliche oder halbsynthetische Polymere, die zur Papierherstellung geeignet sind.

Besonders hervorzuheben ist die Wirkung der erfindungsgemässen auf Trägermittel fixierten Verbindungen der Formel I, II, III und/oder IV gegen thermischen und oxidativen Abbau, vor allem bei thermischer Belastung, wie sie bei der Verarbeitung von Thermoplasten auftritt. Die erfindungsgemässen auf Trägermittel fixierten Verbindungen der Formel I, II, III und/oder IV sind daher hervorragend als Verarbeitungsstabilisatoren einzusetzen.

Vorzugsweise werden die auf Trägermittel fixierten Verbindungen der Formel I, II, III und/oder IV dem zu stabilisierenden Material in Mengen von 1 bis 50 %, beispielsweise 5 bis 40 %, vorzugsweise 5 bis 30 %, insbesondere 5 bis 25 % zugesetzt, bezogen auf das Gewicht des organischen Materials.

Zusätzlich zu den erfindungsgemässen auf Trägermittel fixierten Verbindungen der Formel I, II, III und/oder IV können die erfindungsgemässen Zusammensetzungen weitere Costabilisatoren (Additive) enthalten, wie beispielsweise die folgenden:

<u>1. Antioxidantien</u>

<u>1.1. Alkylierte Monophenole</u>, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-buty|-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Dinonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.

<u>1.2. Alkylthiomethylphenole,</u> z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

<u>1.3. Hydrochinone und alkylierte Hydrochinone,</u> z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

<u>1.4. Tocopherole</u>, z.B. α-Tocopherol, β-Tocopherol, γ-Tocopherol, δ-Tocopherol und Mischungen davon (Vitamin E).

1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.

1.6. Alkyliden-Bisphenole, z.B. 2,2'-Methylen-bis(6-tert-butyl-4-methylphenol), 2,2'-Methylenbis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis(6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1 -Bis(5-tert-butyl-4-hydroxy-2-methyl-phenyl)-3-n-dodecylmercaptobutan, Ethylenglycol-bis [3,3-bis(3'-tert-butyl-4'-hydroxyphenyl)-butyrat], Bis(3-tert-butyl -4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

1.7. O-, N- und S-Benzylverbindungen, z.B. 3,5,3',5'-Tetra-tert-butyl-4,4'-dihydroxydlbenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.

1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.

1.9. Hydroxybenzyl-Aromaten, z.B. 1,3,5-Tris(3,5-di-tert-butyl-4-hydroxybenzyl)-2,4,6-trimethylbenzol, 1,4-Bis (3,5-di-tert-butyl-4-hydroxybenzyl)-2,3,5,6-tetramethylbenzol, 2,4,6-Tris(3,5-di-tert-butyl-4-hydroxybenzyl)-phenol.

1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris (3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehrwertigen Alkoholen, wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydroxyphenyl)-propionsäure mit ein- oder mehrwertigen Alkoholen, wie z.

B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3.5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N, N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis(3,5-di-tert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin.

1.18. Ascorbinsäure (Vitamin C).

1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.

2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethyl butyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300;

$$\left[R\text{-}CH_2CH_2COO(CH_2)_3\right]_2$$

mit R = 3'-tert-Butyl-4'-hydroxy-5'-2H-benzotriazol-2-yl-phenyl.

2.2.2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäure-methylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1 -octyloxy-2,2,6,6-tetramethylpiperidyl)-sebacat, Bis(1 -octyloxy-2,2,6,6-tetramethylpiperidyl)-succinat, Kondensationsprodukt aus N,N'-Bis(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, Gemisch von 4-Hexadecyloxy- und 4-Stearyloxy-2,2,6,6-tetramethylpiperidin, Kondenstionsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4.6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxy-propoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.

3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N, N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris (nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakls(2,4-dl-tert-butyiphenyi)-4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)-methylphosphit, Bis(2,4-di-tert-butyl-6-methylphenyl)-ethylphosphit.

5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

6. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alpha-heptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.

7. Thiosynergisten wie z.B. Thiodipropionsäure-di-laurylester oder Thiodipropionsäure-distearylester.

8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zinkdibutyl-dithiocarbamat, Dioctadecyldisulfid, Pentaerythrit-tetrakis(β-dodecylmercapto)-propionat.

9. Polyamidstabilisatoren, wie z.B. Kupfersalze in Kombination mit Jodiden und/oder Phosphorverbindungen und Salze des zweiwertigen Mangans.

10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("lonomere").

12. Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.

13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

14. Benzofuranone bzw. Indolinone, wie z.B. in US-A-4325863, US-A-4338244, US-A-5175312, US-A-5216052, US-A-5252643, DE-A-4316611, DE-A-4316622, DE-A-4316876, EP-A-0589839 oder EP-A-0591102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzfuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Die zusätzlichen Additive, mit Ausnahme der unter Punkt 14 aufgeführten Benzofuranone, werden beispielsweise in Konzentrationen von 0,01 bis 10%, bezogen auf das Gesamtgewicht des organischen Materials, zugesetzt.
Weitere bevorzugte Zusammensetzungen enthalten neben der Komponente (a) und den auf Trägermittel fixierten Verbindungen der Formel I, II, III und/oder IV noch weitere Additive, insbesondere phenolische Antioxidantien, Lichtschutzmittel oder/und Verarbeitungsstabilisatoren.
Besonders bevorzugte Additive sind phenolische Antioxidantien (Punkt 1 der Liste), sterisch gehinderte Amine (Punkt 2.6 der Liste), Phosphite und Phosphonite (Punkt 4 der Liste) und peroxidzerstörende Verbindungen (Punkt 8 der Liste).
Ebenfalls besonders bevorzugte zusätzliche Additive (Stabilisatoren) sind Benzofuran-2-one, wie sie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 und EP-A-0 591 102 beschrieben werden.
Beispiele für solche Benzofuran-2-one sind Verbindungen der Formel

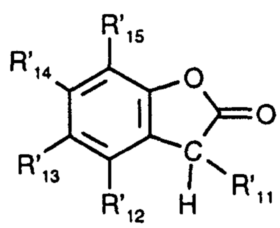

worin

$R'_{11}$ ein unsubstituiertes oder substituiertes carbocyclisches oder heterocyclisches aromatisches Ringsystem bedeutet;
$R'_{12}$ Wasserstoff ist;
$R'_{14}$ Wasserstoff, Alkyl mit 1 bis 12 Kohlenstoffatomen, Cyclopentyl, Cyclohexyl oder Chlor ist;
$R'_{13}$ die Bedeutung von $R'_{12}$ oder $R'_{14}$ hat oder ein Rest der Formel

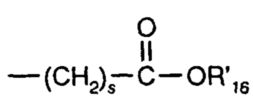 ,

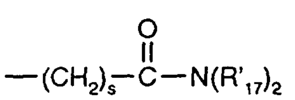 , 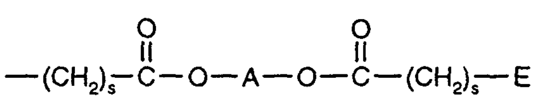 ,

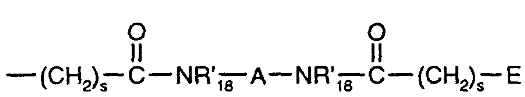 , 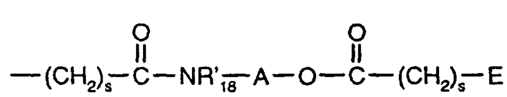 ,

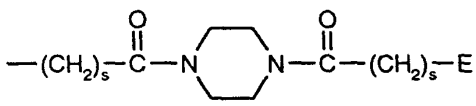 , $-CH_2-S-R'_{19}$, 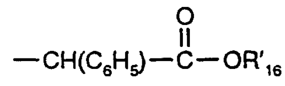 oder -D-E

ist, worin

$R'_{16}$ Wasserstoff, Alkyl mit 1 bis 18 Kohlenstoffatomen, durch Sauerstoff oder Schwefel unterbrochenes Alkyl mit 2 bis 18 Kohlenstoffatomen, Dialkylaminoalkyl mit insgesamt 3 bis 16 Kohlenstoffatomen, Cyclopentyl, Cyclohexyl, Phenyl oder durch 1 bis 3 Alkylreste mit zusammen höchstens 18 Kohlenstoffatomen substituiertes Phenyl ist;

s 0, 1 oder 2 ist;

die Substituenten $R'_{17}$ unabhängig voneinander Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl, ein Rest der Formel $-C_2H_4OH$, $-C_2H_4-O-C_tH_{2t+1}$ oder

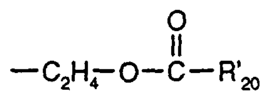

sind oder zusammen mit dem Stickstoffatom, an das sie gebunden sind, einen Piperidin- oder Morpholinrest bilden;

t1 bis 18;

$R'_{20}$ Wasserstoff, Alkyl mit 1 bis 22 Kohlenstoffatomen oder Cycloalkyl mit 5 bis 12 Kohlenstoffatomen;

A ein gegebenenfalls durch Stickstoff, Sauerstoff oder Schwefel unterbrochenes Alkylen mit 2 bis 22 Kohlenstoffatomen;

$R'_{18}$ Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl oder Benzyl;

$R'_{19}$ Alkyl mit 1 bis 18 Kohlenstoffatomen bedeutet;

D -O-, -S-, -SO-, $-SO_2-$ oder $-C(R'_{21})_2-$ ist;

die Substituenten $R'_{21}$ unabhängig voneinander Wasserstoff, $C_1$-$C_{16}$-Alkyl sind, wobei die beiden $R'_{21}$ zusammen 1 bis 16 Kohlenstoffatome enthalten, $R'_{21}$ ferner Phenyl oder einen Rest der Formel

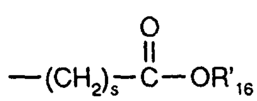 oder 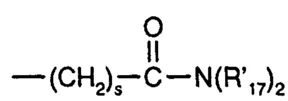

ist, worin s, $R'_{16}$ und

$R'_{17}$ die oben angegebenen Bedeutungen haben;

E ein Rest der Formel

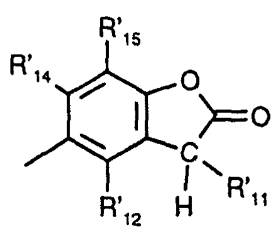

worin $R'_{11}$, $R'_{12}$ und $R'_{14}$ die oben angegebenen Bedeutungen haben; und

$R'_{15}$ Wasserstoff, Alkyl mit 1 bis 20 Kohlenstoffatomen, Cyclopentyl, Cyclohexyl, Chlor oder ein Rest der Formel

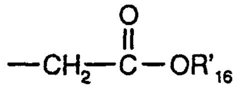 oder 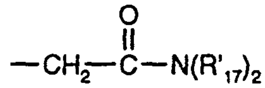

ist, worin $R'_{16}$ und $R'_{17}$ die oben angegebenen Bedeutungen haben, oder $R'_{15}$ zusammen mit $R'_{14}$ einen Tetramethylenrest bildet.

Bevorzugt sind solche Benzofuran-2-one, in denen $R'_{13}$ Wasserstoff, Alkyl mit 1 bis 12 Kohlenstoffatomen, Cyclopentyl, Cyclohexyl, Chlor oder ein Rest der Formel

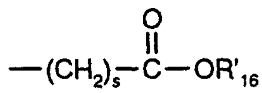 , 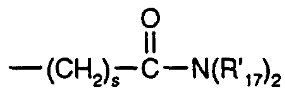

oder -D-E ist, worin s, $R'_{16}$, $R'_{17}$, D und E die oben angegebenen Bedeutungen haben, $R'_{16}$ insbesondere die Bedeutung von Wasserstoff, Alkyl mit 1 bis 18Kohlenstoffatomen, Cyclopentyl oder Cyclohexyl hat.

Bevorzugt sind weiterhin solche Benzofuran-2-one, in denen $R'_{11}$ Phenyl oder durch 1 oder 2 Alkylreste mit zusammen höchstens 12 Kohlenstoffatomen substituiertes Phenyl ist; $R'_{12}$ Wasserstoff; $R'_{14}$ Wasserstoff oder Alkyl mit 1 bis 12 Kohlenstoffatomen ist;
$R'_{13}$ Wasserstoff, Alkyl mit 1 bis 12 Kohlenstoffatomen,

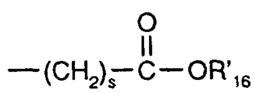 ,

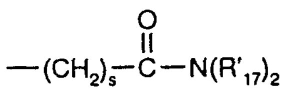

oder -D-E; $R'_{15}$ Wasserstoff, Alkyl mit 1 bis 20 Kohlenstoffatomen,

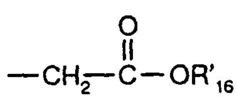 oder 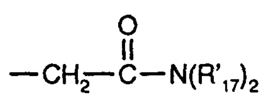

ist oder $R'_{15}$ zusammen mit $R'_{14}$ einen Tetramethylenrest bildet, wobei s, $R'_{16}$, $R'_{17}$, D und E die zu Anfang angegebenen Bedeutungen haben.

Ebenfalls von besonderem Interesse sind solche Benzofuran-2-one, in denen $R'_{13}$ Wasserstoff, Alkyl mit 1 bis 12 Kohlenstoffatomen oder -D-E ist; $R'_{12}$ und $R'_{14}$ unabhängig voneinander Wasserstoff oder Alkyl mit 1 bis 4 Kohlenstoffatomen sind; und $R'_{15}$ Alkyl mit 1 bis 20 Kohlenstoffatomen ist, wobei D und E die zu Anfang angegebenen Bedeutungen haben.

Ebenfalls von hervorgehobenem Interesse sind schliesslich solche Benzofuran-2-one, in denen $R'_{13}$ Alkyl mit 1 bis 4 Kohlenstoffatomen oder -D-E ist; $R'_{12}$ und $R'_{14}$ Wasserstoff sind; und $R'_{15}$ Alkyl mit 1 bis 4 Kohlenstoffatomen, Cyclopentyl oder Cyclohexyl ist, wobei D eine Gruppe $-C(R'_{21})_2-$ und E ein Rest der Formel

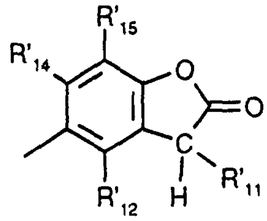

ist, wobei die Substituenten $R'_{21}$ gleich oder verschieden voneinander sind und je Alkyl mit 1 bis 4 Kohlenstoffatomen sind, und $R'_{11}$, $R'_{12}$, $R'_{14}$ und $R'_{15}$ die angegebene Bedeutung haben.

Die Menge an zusätzlich eingesetzten Benzofuran-2-onen, kann in weiten Grenzen schwanken. Beispielsweise können sie zu 0,0001 bis 5, vorzugsweise 0,001 bis 2, insbesondere 0,01 bis 2 Gew.-%, in den erfindungsgemäßen Zusammensetzungen enthalten sein.

Die Einarbeitung der auf Trägermittel fixierten Verbindungen der Formel I, II, III und/oder IV sowie gegebenenfalls weiterer Additive in das polymere, organische Material erfolgt nach bekannten Methoden, beispielsweise vor oder während der Formgebung oder auch durch Aufbringen der gelösten oder dispergierten auf Trägermittel fixierten Verbindungen der Formel I, II, III und/oder IV auf das polymere, organische Material, gegebenenfalls unter nachträglichem Verdunsten des Lösungsmittels. Die auf Trägermittel fixierten Verbindungen der Formel I, II, III und/oder IV können auch in Form eines Masterbatches, der diese beispielsweise in einer Konzentration von 2,5 bis 25 Gew.-% enthält, den zu stabilisierenden Materialien zugesetzt werden.

Die auf Trägermittel fixierten Verbindungen der Formel I, II, III und/oder IV können auch vor oder während der Polymerisation oder vor der Vernetzung zugegeben werden.

Die auf Trägermittel fixierten Verbindungen der Formel I, II, III und/oder IV können in reiner Form oder in Wachsen, Oelen oder Polymeren verkapselt in das zu stabilisierende Material eingearbeitet werden.

Die auf Trägermittel fixierten Verbindungen der Formel I, II, III und/oder IV können auch auf das zu stabilisierende Polymer aufgesprüht werden. Sie sind in der Lage, andere Zusätze (z.B. die oben angegebenen herkömmlichen Additive) bzw. deren Schmelzen zu verdünnen, so dass sie auch zusammen mit diesen Zusätzen auf das zu stabilisierende Polymer aufgesprüht werden können. Besonders vorteilhaft ist die Zugabe durch Aufsprühen während der Desaktivierung der Polymerisationskatalysatoren, wobei z.B. der zur Desaktivierung verwendete Dampf zum Versprühen verwendet werden kann.

Bei kugelförmig polymerisierten Polyolefinen kann es z.B. vorteilhaft sein, die auf Trägermittel fixierten Verbindungen der Formel I, II, III und/oder IV gegebenenfalls zusammen mit anderen Additiven, durch Aufsprühen zu applizieren.

Die so stabilisierten und mit Füllstoffen versehenen Materialien können in verschiedenster Form angewendet werden, z.B. als Folien, Fasern, Bändchen, Formmassen, Profile oder als Bindemittel für Lacke, Klebstoffe oder Kitte.

Wie bereits erwähnt, handelt es sich bei den zu schützenden organischen Materialien vorzugsweise um organische, besonders synthetische, Polymere. Besonders vorteilhaft werden dabei thermoplastische Materialien geschützt, insbesondere Polyolefine. Vor allem ist dabei die ausgezeichnete Wirksamkeit der erfindungsgemässen auf Trägermittel fixierten Verbindungen der Formel I, II, III und/oder IV als Verarbeitungsstabilisatoren (Hitzestabilisatoren) hervorzuheben. Zu diesem Zweck werden sie vorteilhaft vor oder während der Verarbeitung des Polymeren diesem zugesetzt. Aber auch weitere Polymere, z.B. Elastomere können gegen Abbau, z.B. lichtinduzierten oder thermooxidativen Abbau, stabilisiert werden. Elastomere sind der obigen Aufzählung von möglichen organischen Materialien zu entnehmen.

Eine bevorzugte Ausführungsform der vorliegenden Erfindung ist daher die Verwendung der auf Trägermittel fixierten Verbindungen der Formel I, II, III und/oder IV gleichzeitig als Füllstoffe und Stabilisatoren, insbesondere Verarbeitungsstabilisatoren (Thermostabilisatoren), für organische Materialien gegen oxidativen, thermischen oder lichtinduzierten Abbau.

Die auf Trägermittel fixierten Verbindungen der Formel I, II, III und/oder IV zeichnen sich durch ein vorteilhaftes Farbverhalten, d.h. geringe Verfärbung der organischen Materialien während der Verarbeitung, aus.

Die vorliegende Erfindung betrifft auch ein Verfahren zum Stabilisieren eines organischen Materials gegen oxidativen, thermischen oder lichtinduzierten Abbau, dadurch gekennzeichnet, daß man diesem mindestens eine auf Trägermittel fixierte Verbindung der Formel I, II, III und/oder IV einverleibt oder auf dieses aufbringt.

Zusätzlich betrifft die vorliegende Erfindung auch ein Verfahren zum Einbringen eines Füllstoffs in ein organisches Material, dadurch gekennzeichnet, dass man den Füllstoff vor dem Einbringen ins organische Material zuerst mit einer Verbindung der Formel I, II, III und/oder IV beschichtet.

Die folgenden Beispiele erläutern die Erfindun g weiter. Angaben in Teilen oder Prozenten beziehen sich auf

das Gewicht.

Beispiel 1: Herstellung der auf Calciumcarbonat fixierten 3-[3,5-Di-tert-butyl-4-hydroxyphenyl]propionsäure der Formel Ia (Verbindung (101)).

Zu einer Suspension von 100 g Calciumcarbonat in 600 ml Wasser wird bei 65° C eine Lösung von 2,0 g (7,2 mMol) 3-[3,5-Di-tert-butyl-4-hydroxyphenyl]propionsäure der Formel Ia in 30 ml 0,25 N Natriumhydroxid-Lösung getropft. Anschliessend wird noch 15 Minuten weiter gerührt, auf Raumtemperatur abgekühlt und filtriert. Der Rückstand wird am Vakuum bei ca. 65°C zur Gewichtskonstanz getrocknet. Es resultiert 90 g der auf Calciumcarbonat fixierten 3-[3,5-Di-tert-butyl-4-hydroxyphenyl]propionsäure der Formel Ia (Verbindung (101)). Die Beladungskonzentration beträgt 1,0 Gew.-%.

Beispiel 2: Herstellung der auf Calciumcarbonat fixierten 3-[3-tert-Butyl-4-hydroxy-5-methylphenyl]propionsäure der Formel Ib (Verbindung (102)).

Eine Mischung von 400 g Calciumcarbonat und 4,0 g 3-[3-tert-Butyl-4-hydroxy-5-methylphenyl]propionsäure wird solange in einem Mischer mit 4000 Umdrehungen/Minute gemischt bis die Temperatur 150°C erreicht. Nach ca. 20 Minuten wird auf Raumtemperatur abgekühlt. Es resultiert 400 g der auf Calciumcarbonat fixierten 3-[3-tert-Butyl-4-hydroxy-5-methyl-phenyl]propionsäure der Formel Ib (Verbindung (102)). Die Beladungskonzentration beträgt 1,0 Gew.-%.

Beispiel 3: Herstellung der auf Calciumcarbonat fixierten 3,5-Di-tert-butyl-4-hydroxybenzylthioessigsäure der Formel Ic (Verbindung (103)).

In Analogie zu Beispiel 2 wird mit 400 g Calciumcarbonat und 4,0 g 3,5-Di-tert-butyl-4-hydroxybenzylthioessigsäure der Formel Ic die auf Calciumcarbonat fixierte 3,5-Di-tert-butyl-4-hydroxybenzylthioessigsäure der Formel Ic (Verbindung (103)) mit einer Beladungskonzentration von 1,0 Gew.-% erhalten.

Beispiel 4: Herstellung der auf Calciumcarbonat fixierten 3,5-Di-tert-butyl-4-hydroxybenzylphosphonsäure der Formel IIa (Verbindung (104)).

In Analogie zu Beispiel 2 wird mit 400 g Calciumcarbonat und 4,0 g 3,5-Di-tert-butyl-4-hydroxybenzylphosphonsäure der Formel IIa die auf Calciumcarbonat fixierte 3,5-Di-tert-butyl-4-hydroxybenzylphosphonsäure der Formel IIa (Verbindung (104)) mit einer Beladungskonzentration von 1,0 Gew.-% erhalten.

Beispiel 5: Herstellung der auf Calciumcarbonat fixierten 3-(Dodecylthio)propionsäure der Formel IIIa (Verbindung (105)).

In Analogie zu Beispiel 2 wird mit 400 g Calciumcarbonat und 4,0 g 3-(Dodecylthio)propionsäure der Formel IIIa die auf Calciumcarbonat fixierte 3-(Dodecylthio)propionsäure der Formel IIIa (Verbindung (105)) mit einer Beladungskonzentration von 1,0 Gew.-% erhalten.

Beispiel 6: Herstellung des auf Calciumcarbonat fixierten 3,5-Di-tert-butyl-4-hydroxybenzylphosphonsäuremonoethylesters der Formel IIb (Verbindung (106)).

In Analogie zu Beispiel 2 wird mit 400 g Calciumcarbonat und 4,0 g 3,5-Di-tert-butyl-4-hydroxybenzylphosphonsäuremonoethylester der Formel IIb der auf Calciumcarbonat fixierte 3,5-Di-tert-butyl-4-hydroxybenzylphosphonsäuremonoethylester der Formel IIb (Verbindung (106)) mit einer Beladungskonzentration von 1,0 Gew.-% erhalten.

Beispiel 7: Herstellung des auf Calciumcarbonat fixierten Bernsteinsäure-mono(3,3,5,5-tetramethylpiperidinyl)esters der Formel IVa (Verbindung (107)).

In Analogie zu Beispiel 2 wird mit 400 g Calciumcarbonat und 4,0 g Bernsteinsäure-mono-(3,3,5,5-tetramethylpiperidinyl)ester der Formel IVa der auf Calciumcarbonat fixierte Bernsteinsäure-mono(3,3,5,5-tetramethylpiperidinyl)ester der Formel IVa (Verbindung (107)) mit einer Beladungskonzentration von 1,0 Gew.-% erhalten.

Beispiel 8: Herstellung des auf Calciumcarbonat fixierten 2,2,6,6-Tetramethyl-4-(2,3-epoxypropoxy)piperidins der Formel IVg (Verbindung (108)).

In Analogie zu Beispiel 2 wird mit 400 g Calciumcarbonat und 4,0 g 2,2,6,6-Tetramethyl-4-(2,3-epoxypropoxy)piperidin der Formel IVg das auf Calciumcarbonat fixierte 2,2,6,6-Tetramethyl-4-(2,3-epoxypropoxy)piperidin der Formel IVg (Verbindung (108)) mit einer Beladungskonzentration von 1,0 Gew.-% erhalten.

Beispiel 9: Herstellung des auf Titanoxid fixierten 1,2,2,6,6-Pentamethyl-4-(2,3-epoxypropoxy)piperidins der Formel IVh (Verbindung (109)).

9,5 g (118 mMol) Titanoxid (Tiosorb® UF01, Tioxide Specialities Ltd., England) und 0,5 g (2,2 mMol) 1,2,2,6,6-Pentamethyl-4-(2,3-epoxypropoxy)piperidin [EP-A-0 634 449, Beispiel A1] werden in 100 ml Methylenchlorid suspendiert und anschliessend am Vakuumrotationsverdampfer eingeengt. Der Rückstand wird bei 200°C während 6 Stunden stehen gelassen. Anschliessend wird das Produkt abgekühlt und zweimal mit n-Hexan extrahiert. Es resultiert das auf Titanoxid fixierte 1,2,2,6,6-Pentamethyl-4-(2,3-epoxypropoxy)piperidin der Formel IVh (Verbindung (109)) mit einer Beladungskonzentration von 4,0 Gew.-%. Dieser Wert wird mittels einer Stickstoffbestimmung nach Kjeldahl bestimmt.

Beispiel 10: Herstellung des auf Siliciumoxid fixierten 1,2,2,6,6-Pentamethyl-4-(2,3-epoxypropoxy)piperidins der Formel IVh (Verbindung (110)).

9,5 g (158 mMol) Siliciumoxid (Aerosil® 380, Degussa, Deutschland) und 0,5 g (2,2 mMol) 1,2,2,6,6-Pentamethyl-4-(2,3-epoxypropoxy)piperidin [EP-A-0 634 449, Beispiel A1] werden in 100 ml Methylenchlorid suspendiert und anschliessend am Vakuumrotationsverdampfer eingeengt. Der Rückstand wird bei 200°C während 5 Stunden stehen gelassen. Es resultiert das auf Siliciumoxid fixierte 1,2,2,6,6-Pentamethyl-4-(2,3-epoxypropoxy)piperidin der Formel IVh (Verbindung (110)) mit einer Beladungskonzentration von 5,2 Gew.-%. Die Messung des Stickstoffgehalts des Produkts nach Kjeldahl ergibt einen Wert von 0,39 Gew.-%. Zur Kontrolle wird das Produkt noch während 18 Stunden im Soxhlett-Apparat mit siedendem n-Hexan extrahiert und anschliessend getrocknet. Eine erneute Stickstoffbestimmung dieses Produkts nach Kjeldahl ergibt einen Wert von 0,39 Gew.-%. Somit kann der Stabilisator (Verbindung der Formel IVh) durch Extraktion mit n-Hexan nicht vom Siliciumoxid entfernt werden.

Beispiel 11: Herstellung des auf Siliciumoxid fixierten 1-Cyclohexyloxy-2,2,6,6-tetramethyl-4-(2,3-epoxypropoxy)piperidins der Formel IVi (Verbindung (111)).

In Analogie zu Beispiel 10 wird mit 9,5 g Siliciumoxid und 0,5 g 1-Cyclohexyloxy-2,2,6,6-tetramethyl-4-(2,3-epoxypropoxy)piperidin der Formel IVi [EP-A-0 634 449, Beispiel A2] das auf Siliciumoxid fixierte 1-Cyclohexyloxy-2,2,6,6-tetramethyl-4-(2,3-epoxypropoxy)piperidin der Formel IVi (Verbindung (111)) mit einer Beladungskonzentration von 5,2 Gew.-% erhalten.

Beispiel 12: Herstellung des auf Siliciumoxid fixierten 1-Octyloxy-2,2,6,6-tetramethyl-4-(2,3-epoxypropoxy) piperidins der Formel IVk (Verbindung (112)).

In Analogie zu Beispiel 10 wird mit 9,5 g Siliciumoxid und 0,5 g 1-Octyloxy-2,2,6,6-tetramethyl-4-(2,3-epoxypropoxy)piperidin der Formel IVk [EP-A-0 634 449, Beispiel A3] das auf Siliciumoxid fixierte 1-Octyloxy-2,2,6,6-tetramethyl-4-(2,3-epoxypropoxy)piperidin der Formel IVk (Verbindung (112)) mit einer Beladungskonzentration von 5,2 Gew.-% erhalten.

Beispiel 13: Herstellung des auf Siliciumoxid fixierten 1-Benzyl-2,2,6,6-tetramethyl-4-(2,3-epoxypropoxy) piperidins der Formel IVm (Verbindung (113)).

In Analogie zu Beispiel 10 wird mit 9,5 g Siliciumoxid und 0,5 g 1-Benzyl-2,2,6,6-tetramethyl-4-(2,3-epoxypropoxy)piperidin der Formel IVm [EP-A-0 634 449, Beispiel A4] das auf Siliciumoxid fixierte 1-Benzyl-2,2,6,6-tetramethyl-4-(2,3-epoxypropoxy)piperidin der Formel IVm (Verbindung (113)) mit einer Beladungskonzentration von 5,2 Gew.-% erhalten.

Beispiel 14: Herstellung der auf Calciumcarbonat fixierten N-[4-(2,2,6,6-tetramethyl)piperidinyl]-aminoessigsäure der Formel IVf (Verbindung (114)).

In Analogie zu Beispiel 2 wird mit 400 g Calciumcarbonat und 4,0 g N-[4-(2,2,6,6-tetramethyl)piperidinyl]-aminoessigsäure der Formel IVf [C.A. Reg. No. 71866-13-2] die auf Calciumcarbonat fixierte N-[4-(2,2,6,6-tetramethyl) piperidinyl]-aminoessigsäure der Formel IVf (Verbindung (114)) mit einer Beladungskonzentration von 1,0 Gew.-% erhalten.

Beispiel 15: Herstellung des auf Calciumcarbonat fixierten Bernsteinsäure-mono(3,3,4,5,5-pentamethylpiperidinyl)esters der Formel IVb (Verbindung (115)).

a) In Analogie zu Beispiel 2 wird mit 400 g Calciumcarbonat und 4,0 g Bernsteinsäuremono(3,3,4,5,5-pentamethylpiperidinyl)ester der Formel IVb [Beispiel 15b] der auf Calciumcarbonat fixierte Bernsteinsäure-mono (3,3,4,5,5-pentamethylpiperidinyl)ester der Formel IVb (Verbindung (115)) mit einer Beladungskonzentration von 1,0 Gew.-% erhalten.

b) Eine Mischung von 85,5 g (0,50 Mol) 4-Hydroxy-1,2,2,6,6-pentamethylpiperidin, 50 g (0,50 Mol) Bernsteinsäureanhydrid und 500 ml Xylol wird während einer Stunde unter Rückfluss gekocht. Das Reaktionsgemisch wird anschliessend auf 3 Liter n-Hexan gegossen. Das Produkt wird filtriert. Kristallisation des Rückstandes aus Xylol liefert 125 g (92 %) Bernsteinsäure-mono(3,3,4,5,5-pentamethylpiperidinyl)ester der Formel IVb, Smp. 163°C. Analyse berechnet: C 61,97; H 9,29; N 5,16 %. Analyse gefunden: C 61,92; H 9,43; N 5,10 %.

Beispiel 16: Herstellung des auf Calciumcarbonat fixierten Bernsteinsäure-mono(3,3,5,5-tetramethylpiperidinyl)amids der Formel IVc (Verbindung (116)).

a) In Analogie zu Beispiel 2 wird mit 400 g Calciumcarbonat und 4,0 g Bernsteinsäuremono(3,3,5,5-tetramethylpiperidinyl)amid der Formel IVc [Beispiel 16b] das auf Calciumcarbonat fixierte Bemsteinsäure-mono (3,3,5,5-tetramethylpiperidinyl)amid der Formel IVc (Verbindung (116)) mit einer Beladungskonzentration von 1,0 Gew.-% erhalten.

b) Eine Mischung von 48 g (0,30 Mol) 4-Amino-2,2,6,6-tetramethylpiperidin, 30 g (0,30 Mol) Bernsteinsäureanhydrid und 1000 ml Xylol wird während 6 Stunden unter Rückfluss gekocht. Das Reaktionsgemisch wird anschliessend abgekühlt und das ausgefallene Produkt filtriert. Kristallisation des Rückstandes aus Aceton/Wasser liefert 64 g (83 %) Bernsteinsäure-mono(3,3,5,5-tetramethylpiperidinyl)amid der Formel IVc, Smp. 322°C. Analyse berechnet: C 60,91; H 9,44; N 10,93 %. Analyse gefunden: C 60,47; H 9,50; N 10,86 %.

Beispiel 17: Herstellung des auf Calciumcarbonat fixierten Bernsteinsäure-mono(3,3,4,5,5-pentamethylpiperidinyl)amids der Formel IVd (Verbindung (117)).

a) In Analogie zu Beispiel 2 wird mit 400 g Calciumcarbonat und 4,0 g Bernsteinsäuremono(3,3,4,5,5-pentamethylpiperidinyl)amid der Formel IVd [Beispiel 17b] das auf Caiciumcarbonat fixierte Bernsteinsäure-mono (3,3,4,5,5-pentamethylpiperidinyl)amid der Formel IVd (Verbindung (117)) mit einer Beladungskonzentration von 1,0 Gew.-% erhalten.

b) Die Herstellung des Bernsteinsäure-mono(3,3,4,5,5-pentamethylpiperidinyl)amids der Formel IVd erfolgt in Analogie zu Beispiel 16b mit 4-Amino-1,2,2,6,6-pentamethylpiperidin anstelle von 4-Amino-2,2,6,6-tetramethylpiperidin.

Beispiel 18: Herstellung der auf Calciumcarbonat fixierten 2,2,6,6-Tetramethyl-4-piperidinyloxyessigsäure der Formel IVe (Verbindung (118)).

In Analogie zu Beispiel 2 wird mit 400 g Calciumcarbonat und 4,0 g 2,2,6,6-Tetramethyl-4-piperidinyloxyessigsäure der Formel IVe die auf Calciumcarbonat fixierte 2,2,6,6-Tetramethyl-4-piperidinyloxyessigsäure der Formel IVe (Verbindung (118)) mit einer Beladungskonzentration von 1,0 Gew.-% erhalten.

Beispiel 19: Herstellung der auf Calciumcarbonat fixierten Dodec-2-enyl-bernsteinsäuremono(3,3,5,5-tetramethylpiperidinyl)amids der Formel IVn (Verbindung (119)).

a) In Analogie zu Beispiel 2 wird mit 400 g Calciumcarbonat und 4,0 g Dodec-2-enyl-bemsteinsäure-mono (3,3,5,5-tetramethylpiperidinyl)amid der Formel IVn [Beispiel 19b] das auf Calciumcarbonat fixierte Dodec-2-enylbemsteinsäure-mono(3,3,5,5-tetramethylpiperidinyl)amid der Formel IVn (Verbindung (119)) mit einer Beladungskonzentration von 1,0 Gew.-% erhalten.

b) Eine Mischung von 11,7 g (75 mMol) 4-Amino-2,2,6,6-tetramethylpiperidin, 20 g (75 mMol) Dodec-2-enyl-bernsteinsäureanhydrid [Fluka 45346] und 250 ml Xylol wird während 6 Stunden unter Rückfluss gekocht. Das Reaktionsgemisch wird anschliessend abgekühlt und am Vakuumrotationsverdampfer eingeengt. Kristallisation des Rückstandes aus Methanol/Acetonitril liefert 30 g (95 %) Dodec-2-enyl-bemsteinsäure-mono(3,3,5,5-tetramethylpiperidinyl)amid der Formel IVn, Smp. 182°C. Analyse berechnet: C 71,05; H 10,97; N 6,63 %. Analyse gefunden: C 69,89; H 10,89; N 6,60 %.

Beispiel 20: Herstellung der auf Talk fixierten 3-(Dodecylthio)propionsäure der Formel IIIa (Verbindung (120)).

Zu einer Lösung von 0,5 g 3-(Dodecylthio)propionsäure der Formel IIIa in 200 ml Hexan werden 50 g Talk (Luzenac® ) gegeben. Das Gemisch wird anschliessend am Vakuumrotationsverdampfer eingeengt. Es resultieren 50,5 g der auf Talk fixierten 3-(Dodecylthio)propionsäure der Formel IIIa (Verbindung (120)). Die Beladungskonzentration beträgt 1,0 Gew.-%.

Beispiel 21: Einarbeitung von Calciumcarbonat in Polypropylen (Dispergierbarkeitsprüfung).

80 Gewichtsteile Polypropylen-Granulat (Propathene® GYM 45) werden mit 20 Gewichtsteilen Calciumcarbonat bzw. mit 20 Gewichtsteilen der erfindungsgemässen auf Calciumcarbonat fixierten Verbindungen aus den Beispielen 1 bis 8 bei 230°C in einem Göttfert-Extrusiometer vermischt. Die bei der Extrusion anfallenden Polypropylen-Bänder werden bei 190°C während 2 Minuten zu 0,5 mm dicken Folien verpresst. Die Dispergierung des Calciumcarbonats (Füllstoffs) in den Folien wird anschliessend visuell nach folgendem Schlüssel beurteilt. 1 = sehr schlecht; 2 = schlecht; 3 = mittel; 4 = mittel-gut; 5 = gut; 6 = sehr gut. Die Resultate sind in Tabelle 1 zusammengefasst.

Tabelle 1:

| Füllstoff | Dispergierung |
|---|---|
| 20 Teile Calciumcarbonat | 3 (mittel) |
| 20 Teile Verbindung (105) | 6 (sehr gut) |
| 20 Teile Verbindung (106) | 5 (gut) |

Beispiel 22: Stabilisierung von Polypropylen, Ofenalterungstest und Belichtungstest.

40 Gewichtsteile der erfindungsgemässen auf Trägermittel fixierten Verbindungen aus den Beispielen 1 bis 20 werden mit 60 Gewichtsteilen Polypropylenpulver (® Profax 6501) bei 230° C in einem Brabender-Plastographen 6 Minuten unter Stickstoff vermischt. Anschliessend wird die Mischung bei 230°C zu 1,0 mm dicken Platten gepresst aus welcher 45 mal 17 mm grosse Prüflinge gestanzt werden. Ein Teil dieser Prüflinge wird anschliessend in einem Umluftofen bei 135°C gealtert. Es wird die Zeit bis zum Auftreten einer visuell sichtbaren lokal begrenzten farblichen Veränderung der Prüflinge gemessen. Je länger die Zeit dauert, desto wirksamer ist der Stabilisator. Die Resultate sind in Tabelle 2 zusammengefasst.

Tabelle 2:

| Ofenalterungstest bei 135°C | |
|---|---|
| Füllstoff | Tage bis Zersetzung |
| 40 Teile Calciumcarbonat | 1 |
| 40 Teile Verbindung (102) | 9 |
| 40 Teile Verbindung (107) | 9 |
| 40 Teile Verbindung (108) | 9 |

Der andere Teil der Prüflinge wird einem Belichtungstest (Weatherometer, Firma Atlas, Typ WOM Ci 65, Schwarztafel ["Black Panel Temperature"] 63°C) unterworfen. Von diesen Prüflingen wird anschliessend der Glanz und die Oberflächenrauhheit bestimmt. Der Glanz wird mit einem Reflektor gemessen. Als Vergleichsmass für die messtechnische Erfassung des Glanzvermögens einer Oberfläche wird der Reflektormeterwert (ROM) verwendet. Seine Grösse wird vom Anteil bestimmt, den die Oberfläche aufgrund ihrer Reflektionseigenschaft zur Entstehung des Glanzeindrucks beiträgt. Der Reflektormeterwert ist somit die optische Kenngrösse für den Glanz und ebenso für den Zersetzungsgrad einer Oberfläche. Je grösser der Wert ist, desto besser ist die Probenoberfläche. Für die Bestimmung der Oberflächenrauhheit (Ra) wird der Prüfling mit einer Messnadel auf einer bestimmten Länge abgetastet und damit ein Profil (Länge, Höhen, Tiefen) ausgemessen. Ra bedeutet das arithmetische Mittel der absoluten Beiträge aller Profilordinaten innerhalb der Gesamtmess-Strecke nach dem Ausfiltern von Formabweichungen und groben Anteilen der Welligkeit. Je höher der Wert, desto schlechter ist die Probenoberfläche. Die Resultate sind in Tabelle 3 zusammengefasst.

Tabelle 3:

| Belichtungstest | | | | | | | | |
|---|---|---|---|---|---|---|---|---|
| Füllstoff | Glanz (ROM) nach Stunden | | | | Oberflächenrauhheit (Ra) nach Stunden | | | |
| | 0 | 250 | 400 | 500 | 0 | 250 | 400 | 500 |
| 40 Teile Calciumcarbonat | 74 | 40 | 17 | 13 | 0,11 | 0,44 | 0,93 | 1,22 |
| 40 Teile Verbindung (107) | 70 | 62 | 61 | 61 | 0,12 | 0,16 | 0,16 | 0,18 |
| 40 Teile Verbindung (108) | 72 | 68 | 67 | 67 | 0,12 | 0,14 | 0,15 | 0,15 |

**Patentansprüche**

1. Auf Trägermittel fixierte Verbindungen der Formel I, II, III und/oder IV

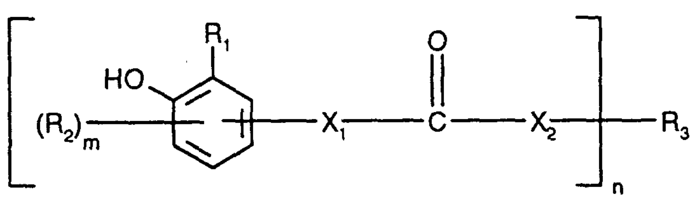

(I)

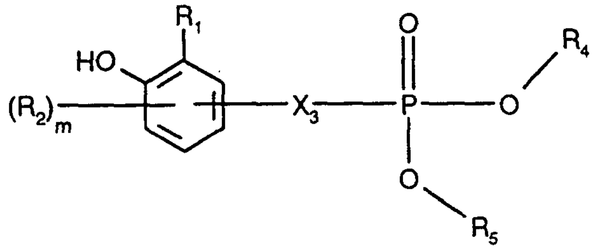

(II)

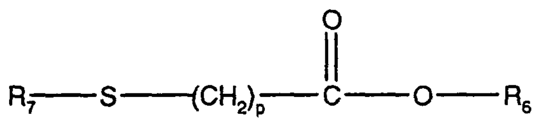

(III)

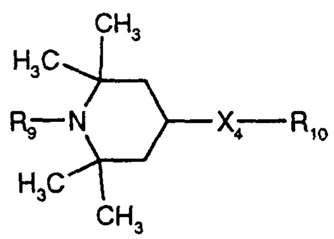

(IV)

worin

$R_1$ $C_1$-$C_{18}$-Alkyl, $C_5$-$C_{12}$-Cycloalkyl, Phenyl oder $C_7$-$C_9$-Phenylalkyl bedeutet,
$R_2$ $C_1$-$C_{18}$-Alkyl, $C_5$-$C_{12}$-Cycloalkyl, Phenyl oder $C_7$-$C_9$-Phenylalkyl darstellt,
$R_4$ Wasserstoff, $C_1$-$C_{20}$-Alkyl, unsubstituiertes oder durch $C_1$-$C_4$-Alkyl substituiertes Phenyl oder Naphthyl; Ammonium oder $\frac{1}{r}M^{r+}$ bedeutet,
$R_5$ Wasserstoff, $C_1$-$C_{20}$-Alkyl, unsubstituiertes oder durch $C_1$-$C_4$-Alkyl substituiertes Phenyl oder Naphthyl; Ammonium oder $\frac{1}{r}M^{r+}$ darstellt,
$R_6$ Wasserstoff, $C_1$-$C_{18}$-Alkyl, $C_5$-$C_{12}$-Cycloalkyl, $C_7$-$C_9$-Phenylalkyl, Ammonium oder $\frac{1}{r}M^{r+}$ bedeutet,
$R_7$ $C_1$-$C_{18}$-Alkyl, unsubstituiertes oder durch $C_1$-$C_4$-Alkyl substituiertes Phenyl; oder $-(CH_2)_q-CO_2R_6$ darstellt,
$R_8$ $C_1$-$C_8$-Alkyl bedeutet,
$R_9$ Wasserstoff, $C_1$-$C_8$-Alkyl, $O^{\bullet}$, OH, NO, $-CH_2CN$, $C_1$-$C_{18}$-Alkoxy, $C_5$-$C_{12}$-Cycloalkyloxy, $C_3$-$C_6$-Alkenyl, $C_3$-$C_6$-Alkinyl, $C_1$-$C_8$-Acyl, unsubstituiertes oder am Phenylring durch $C_1$-$C_4$-Alkyl substituiertes $C_7$-$C_9$-Phenylalkyl darstellt,
$R_{10}$

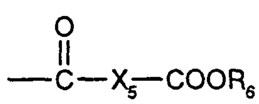 , 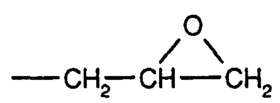

oder $-X_6-COOR_6$ bedeutet,
$R_{11}$ Wasserstoff oder $C_1$-$C_{18}$-Alkyl darstellt,
$R_{12}$ $C_1$-$C_{18}$-Alkyl oder $C_2$-$C_{14}$-Alkenyl bedeutet,

$R_{13}$ Wasserstoff oder $C_1$-$C_4$-Alkyl darstellt,
M ein r-wertiges Metallkation ist,
$X_1$ eine direkte Bindung, $C_1$-$C_8$-Alkylen, durch Sauerstoff oder Schwefel unterbrochenes $C_2$-$C_8$-Alkylen;

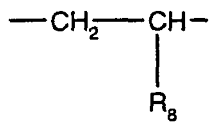 oder 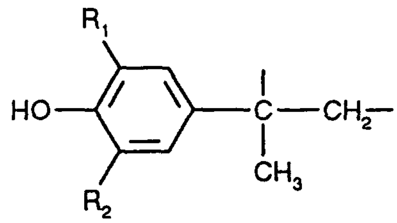

darstellt, wobei $R_1$ und $R_2$ die obige Bedeutung haben,
$X_2$ Sauerstoff oder -NH- bedeutet,
$X_3$ $C_1$-$C_6$-Alkylen darstellt,
$X_4$ Sauerstoff oder -$NR_{11}$- bedeutet,
$X_5$ eine direkte Bindung, $C_1$-$C_8$-Alkylen, $C_2$-$C_8$-Alkenylen,

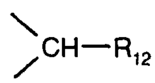 , 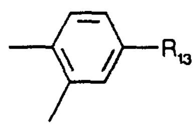 ,

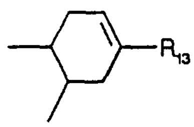 oder 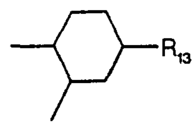

darstellt,
$X_6$ $C_1$-$C_{18}$-Alkylen, $C_2$-$C_{18}$-Alkenylen, durch Sauerstoff oder Schwefel unterbrochenes $C_2$-$C_{18}$-Alkylen; oder Phenylen bedeutet,
m 0,1 oder 2 darstellt,
n eine ganze Zahl aus dem Bereich von 1 bis 6 bedeutet,
p 1 oder 2 darstellt,
q 1 oder 2 ist,
r 1, 2 oder 3 darstellt, und
wenn n = 1 ist,
$R_3$ Wasserstoff, $C_1$-$C_{25}$-Alkyl, $C_5$-$C_{12}$-Cycloalkyl, unsubstituiertes oder durch $C_1$-$C_4$-Alkyl substituiertes Phenyl; einen einwertigen Rest einer Hexose, einen einwertigen Rest eines Hexitols; und wenn $X_2$ Sauerstoff ist, $R_3$ zusätzlich Ammonium oder $\frac{M^{r+}}{r}$ darstellt, oder
wenn n= 2 ist,
$R_3$ $C_2$-$C_{12}$-Alkylen, durch Sauerstoff oder Schwefel unterbrochenes $C_4$-$C_{12}$-Alkylen; einen zweiwertigen Rest einer Hexose oder einen zweiwertigen Rest eines Hexitols bedeutet, oder
wenn n = 3 ist,
$R_3$

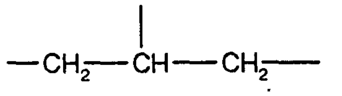,

einen dreiwertigen Rest einer Hexose oder einen dreiwertigen Rest eines Hexitols darstellt, oder
wenn n = 4 ist,
$R_3$ $C_4$-$C_{10}$-Alkantetrayl, einen vierwertigen Rest einer Hexose oder einen vierwertigen Rest eines Hexitols bedeutet, oder
wenn n = 5 ist,
$R_3$ einen fünfwertigen Rest einer Hexose oder einen fünfwertigen Rest eines Hexitols darstellt, oder
wenn n = 6 ist,
$R_3$

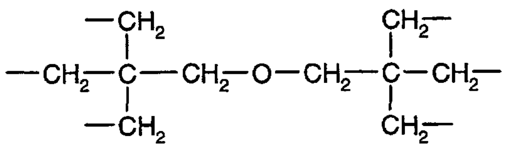

oder einen sechswertigen Rest eines Hexitols bedeutet; und

worin das Trägermittel ein Füllstoff auf Oxid- oder Hydroxid-Basis, Silikat-Basis oder Carbonat-Basis ist.

**2.** Auf Trägermittel fixierte Verbindungen gemäss Anspruch 1, worin die Verbindungen eine Verbindung der Formel I, II und/oder III bedeuten.

**3.** Auf Trägermittel fixierte Verbindungen gemäss Anspruch 1, worin

$R_1$ $C_1$-$C_{12}$-Alkyl, $C_5$-$C_8$-Cycloalkyl, Phenyl oder $C_7$-$C_9$-Phenylalkyl bedeutet,
$R_2$ $C_1$-$C_{12}$-Alkyl, $C_5$-$C_8$-Cycloalkyl, Phenyl oder $C_7$-$C_9$-Phenylalkyl darstellt,
$R_4$ Wasserstoff, $C_1$-$C_{12}$-Alkyl, unsubstituiertes oder durch $C_1$-$C_4$-Alkyl substituiertes Phenyl; Ammonium oder $\frac{M^{r+}}{r}$ bedeutet,
$R_5$ Wasserstoff, $C_1$-$C_{12}$-Alkyl, unsubstituiertes oder durch $C_1$-$C_4$-Alkyl substituiertes Phenyl; Ammonium oder $\frac{M^{r+}}{r}$ darstellt,
$R_6$ Wasserstoff, $C_1$-$C_{12}$-Alkyl, $C_5$-$C_8$-Cycloalkyl, $C_7$-$C_9$-Phenylalkyl, Ammonium oder $\frac{M^{r+}}{r}$ bedeutet,
$R_7$ $C_2$-$C_{16}$-Alkyl, unsubstituiertes oder durch $C_1$-$C_4$-Alkyl substituiertes Phenyl; oder $-(CH_2)_q-CO_2R_6$ darstellt,
$R_8$ $C_1$-$C_4$-Alkyl bedeutet,
M ein Alkalimetall, Erdalkalimetall oder Aluminium ist,
$X_1$ eine direkte Bindung, $C_1$-$C_6$-Alkylen, durch Sauerstoff oder Schwefel unterbrochenes
$C_2$-$C_6$-Alkylen;

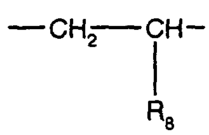 oder 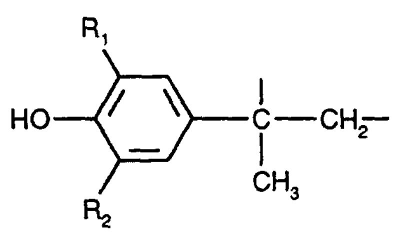

darstellt, wobei $R_1$
und $R_2$ die obige Bedeutung haben,
$X_2$ Sauerstoff oder -NH- bedeutet,

$X_3$ $C_1$-$C_5$-Alkylen darstellt,
m 1 oder 2 bedeutet,
n eine ganze Zahl aus dem Bereich von 1 bis 4 darstellt,
p 1 oder 2 bedeutet,
q 1 oder 2 ist,
r 1, 2 oder 3 darstellt, und
wenn n = 1 ist,
$R_3$ Wasserstoff, $C_1$-$C_{18}$-Alkyl, $C_5$-$C_8$-Cycloalkyl, unsubstituiertes oder durch $C_1$-$C_4$-Alkyl substituiertes Phenyl; und wenn $X_2$ Sauerstoff ist, $R_3$ zusätzlich Ammonium oder $\frac{M^{r+}}{r}$ darstellt, oder
wenn n= 2 ist,
$R_3$ $C_2$-$C_{10}$-Alkylen, durch Sauerstoff oder Schwefel unterbrochenes $C_4$-$C_{10}$-Alkylen bedeutet, oder
wenn n = 3 ist,
$R_3$

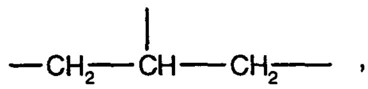

darstellt, oder
wenn n = 4 ist,
$R_3$ $C_4$-$C_8$-Alkantetrayl bedeutet.

**4.** Auf Trägermittel fixierte Verbindungen gemäss Anspruch 1, worin

$R_1$ $C_1$-$C_{10}$-Alkyl, $C_5$-$C_6$-Cycloalkyl, Phenyl oder Benzyl bedeutet,
$R_2$ $C_1$-$C_{10}$-Alkyl, $C_5$-$C_6$-Cycloalkyl, Phenyl oder Benzyl darstellt,
$R_4$ Wasserstoff, $C_1$-$C_{10}$-Alkyl, Phenyl, Ammonium oder $\frac{M^{r+}}{r}$ bedeutet,
$R_5$ Wasserstoff, $C_1$-$C_{10}$-Alkyl, Phenyl, Ammonium oder $\frac{M^{r+}}{r}$ darstellt,
$R_6$ Wasserstoff, $C_1$-$C_{10}$-Alkyl, $C_5$-$C_6$-Cycloalkyl, Benzyl, Ammonium oder $\frac{M^{r+}}{r}$ bedeutet,
$R_7$ $C_4$-$C_{14}$-Alkyl, Phenyl oder $-(CH_2)_q-CO_2R_6$ darstellt,
$R_8$ Methyl bedeutet,
M ein Alkalimetall, Erdalkalimetall oder Aluminium ist,
$X_1$ eine direkte Bindung, $C_1$-$C_4$-Alkylen, durch Schwefel unterbrochenes $C_2$-$C_6$-Alkylen;

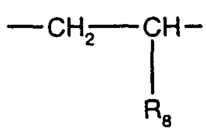
oder
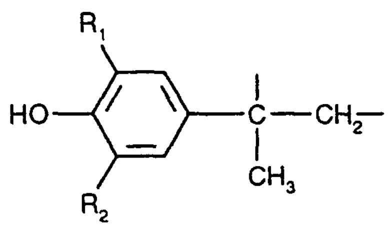

darstellt, wobei $R_1$ und $R_2$ die obige Bedeutung haben,
$X_2$ Sauerstoff bedeutet,
$X_3$ $C_1$-$C_4$-Alkylen darstellt,
m 1 oder 2 bedeutet,
n eine ganze Zahl aus dem Bereich von 1 bis 4 darstellt,
p 2 bedeutet,
q 2 ist,
r 1, 2 oder 3 darstellt, und
wenn n = 1 ist,
$R_3$ Wasserstoff, $C_1$-$C_{12}$-Alkyl, $C_5$-$C_6$-Cycloalkyl, Phenyl, Ammonium oder $\frac{M^{r+}}{r}$ darstellt, oder
wenn n= 2 ist,
$R_3$ $C_2$-$C_8$-Alkylen, durch Sauerstoff unterbrochenes $C_4$-$C_{10}$-Alkylen bedeutet, oder

wenn n = 3 ist,
$R_3$

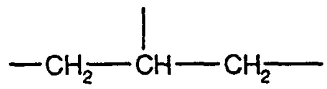 ,

darstellt, oder
wenn n = 4 ist,
$R_3$

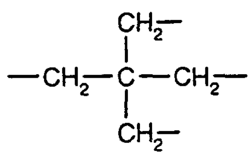

bedeutet.

**5.** Auf Trägermittel fixierte Verbindungen gemäss Anspruch 1, worin

$R_1$ tert-Butyl bedeutet,
$R_2$ $C_1$-$C_4$-Alkyl darstellt und in ortho Stellung zur OH- Gruppe gebunden ist, und m 1 bedeutet.

**6.** Auf Trägermittel fixierte Verbindungen gemäss Anspruch 1, worin $R_9$ Wasserstoff, Methyl, $C_8$-$C_{12}$-Alkoxy, Cyclohexyloxy oder Benzyl darstellt.

**7.** Auf Trägermittel fixierte Verbindungen gemäss Anspruch 1, worin

$R_6$ Wasserstoff, $C_1$-$C_{10}$-Alkyl, $C_5$-$C_6$-Cycloalkyl, Benzyl, Ammonium oder $\frac{M^{r+}}{r}$ bedeutet,
$R_9$ Wasserstoff, $C_1$-$C_4$-Alkyl, O°, OH, NO, $C_4$-$C_{18}$-Alkoxy, $C_5$-$C_7$-Cycloalkoxy, $C_2$-$C_6$-Acyl, unsubstituiertes oder am Phenylring durch $C_1$-$C_4$-Alkyl substituiertes $C_7$-$C_9$-Phenylalkyl darstellt,
$R_{10}$

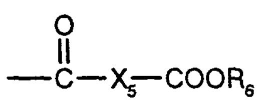 , 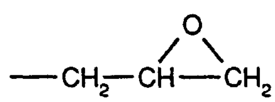

oder $-X_6-COOR_6$ bedeutet,
$R_{11}$ Wasserstoff oder $C_1$-$C_{12}$-Alkyl darstellt,
$R_{12}$ $C_1$-$C_{12}$-Alkyl oder $C_6$-$C_{14}$-Alkenyl bedeutet,
$R_{13}$ Wasserstoff oder Methyl darstellt,
M ein Alkalimetall oder Erdalkalimetall ist,
$X_4$ Sauerstoff oder $-NR_{11}-$ bedeutet,
$X_5$ eine direkte Bindung, $C_1$-$C_6$-Alkylen, $C_2$-$C_6$-Alkenylen,

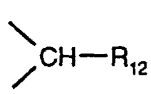 , 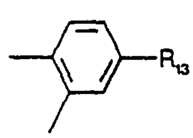 ,

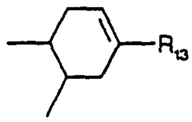 oder 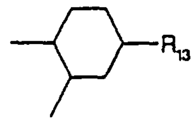

darstellt,
$X_6$ $C_1$-$C_{12}$-Alkylen, $C_2$-$C_{12}$-Alkenylen, durch Sauerstoff unterbrochenes $C_2$-$C_{12}$-Alkylen; oder Phenylen bedeutet, und
r 1 oder 2 darstellt.

**8.** Auf Trägermittel fixierte Verbindungen gemäss Anspruch 1, worin

$R_6$ Wasserstoff, $C_1$-$C_8$-Alkyl, Cyclohexyl oder $\frac{M^{r+}}{r}$ bedeutet,
$R_9$ Wasserstoff, $C_1$-$C_4$-Alkyl, $C_4$-$C_{18}$-Alkoxy, $C_5$-$C_7$-Cycloalkoxy, $C_2$-$C_6$-Acyl oder $C_7$-$C_9$-Phenylalkyl darstellt,
$R_{10}$

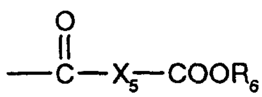 , 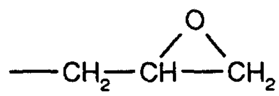

oder $-X_6-COOR_6$ bedeutet,
$R_{11}$ Wasserstoff oder $C_1$-$C_8$-Alkyl darstellt,
$R_{12}$ $C_1$-$C_8$-Alkyl oder $C_6$-$C_{14}$-Alkenyl bedeutet,
$R_{13}$ Wasserstoff oder Methyl darstellt,
M ein Alkalimetall oder Erdalkalimetall ist,
$X_4$ Sauerstoff oder $-NR_{11}-$ bedeutet,
$X_5$ eine direkte Bindung, $C_1$-$C_6$-Alkylen,

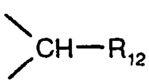 , 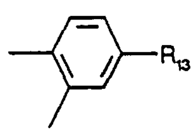 , 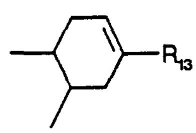

oder

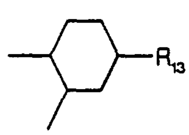

darstellt,
$X_6$ $C_1$-$C_8$-Alkylen, $C_2$-$C_8$-Alkenylen, durch Sauerstoff unterbrochenes $C_2$-$C_8$-Alkylen; oder Phenylen bedeutet, und
r 1 oder 2 darstellt.

**9.** Auf Trägermittel fixierte Verbindungen gemäss Anspruch 1, worin

$R_1$ $C_1$-$C_6$-Alkyl, Cyclohexyl oder Phenyl bedeutet,
$R_2$ $C_1$-$C_6$-Alkyl, Cyclohexyl oder Phenyl darstellt und in ortho Stellung zur OH-Gruppe gebunden ist,
$R_3$ Wasserstoff, $C_1$-$C_8$-Alkyl, Cyclohexyl oder $\frac{M^{r+}}{r}$ ist,

$R_4$ Wasserstoff, $C_1$-$C_8$-Alkyl oder $\frac{M^{r+}}{r}$ bedeutet,
$R_5$ Wasserstoff, $C_1$-$C_8$-Alkyl oder $\frac{M^{r+}}{r}$ darstellt,
$R_6$ Wasserstoff, $C_1$-$C_8$-Alkyl, Cyclohexyl oder $\frac{M^{r+}}{r}$ bedeutet,
$R_7$ $C_8$-$C_{14}$-Alkyl oder $-(CH_2)_q-CO_2R_6$ darstellt,
$R_8$ Methyl bedeutet,
$R_9$ Wasserstoff, $C_1$-$C_4$-Alkyl, $C_4$-$C_{12}$-Alkoxy, $C_5$-$C_7$-Cycloalkoxy, Acetyl oder $C_7$-$C_9$-Phenylalkyl darstellt,
$R_{10}$

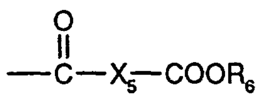 , 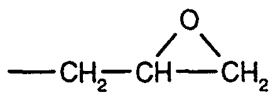

oder $-X_6-COOR_6$ bedeutet,
$R_{11}$ Wasserstoff oder $C_1$-$C_4$-Alkyl darstellt,
$R_{12}$ $C_8$-$C_{14}$-Alkenyl bedeutet,
$R_{13}$ Wasserstoff oder Methyl darstellt,
M ein Alkalimetall oder Erdalkalimetall ist,
$X_1$ $C_2$-$C_4$-Alkylen, durch Schwefel unterbrochenes $C_2$-$C_4$-Alkylen; oder

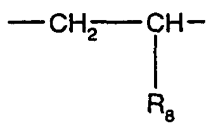

darstellt,
$X_2$ Sauerstoff bedeutet,
$X_3$ $C_1$-$C_4$-Alkylen darstellt,
$X_4$ Sauerstoff oder $-NR_{11}-$ bedeutet,
$X_5$ eine direkte Bindung, $C_1$-$C_4$-Alkylen,

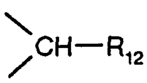 , 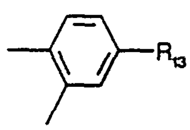 , 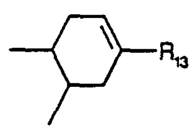

oder

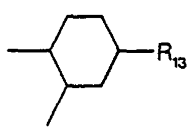

darstellt,
$X_6$ $C_1$-$C_4$-Alkylen oder Phenylen bedeutet,
m 1 oder 2 darstellt,
n 1 ist,
p 2 bedeutet,
q 2 ist, und
r 1 oder 2 darstellt.

**10.** Auf Trägermittel fixierte Verbindungen gemäss Anspruch 1, worin

$R_1$ tert-Butyl bedeutet,
$R_2$ $C_1$-$C_4$-Alkyl darstellt und in ortho Stellung zur OH-Gruppe gebunden ist,
$R_3$ Wasserstoff oder $C_1$-$C_4$-Alkyl darstellt,
$R_4$ Wasserstoff, $C_1$-$C_4$-Alkyl oder $\frac{M^{r+}}{r}$ bedeutet,
$R_5$ Wasserstoff, $C_1$-$C_4$-Alkyl oder $\frac{M^{r+}}{r}$ darstellt,
$R_6$ Wasserstoff bedeutet,
$R_7$ $C_{10}$-$C_{12}$-Alkyl darstellt,
$R_9$ Wasserstoff, Methyl, $C_8$-$C_{12}$-Alkoxy, Cyclohexyloxy oder Benzyl darstellt,
$R_{10}$

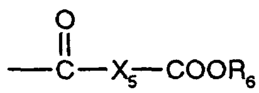 , 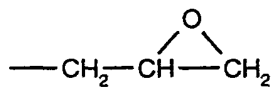

oder $—X_6—COOR_6$ bedeutet,
$R_{11}$ Wasserstoff darstellt,
$R_{12}$ $C_{10}$-$C_{12}$-Alkenyl bedeutet,
M Calcium darstellt,
$X_1$ Ethylen oder durch Schwefel unterbrochenes Ethylen bedeutet,
$X_2$ Sauerstoff darstellt,
$X_3$ Methylen bedeutet,
$X_4$ Sauerstoff oder $-NR_{11}-$ darstellt,
$X_5$ Ethylen oder

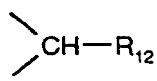

bedeutet,
$X_6$ Methylen darstellt,
m 1 bedeutet,
n 1 ist,
p 2 darstellt, und
r 2 bedeutet.

**11.** Auf Trägermittel fixierte Verbindungen gemäss Anspruch 1, worin das Trägermittel Aluminiumoxid, Magnesiumoxid, Titanoxid, Siliciumoxid, Talk, Calciumcarbonat oder Dolomit ist.

**12.** Auf Trägermittel fixierte Verbindungen gemäss Anspruch 1, worin die Verbindungen der Formel I, II, III und/oder IV bezüglich des Gewichts des Trägermittels in einer Menge von 0,01 bis 10 Gew.-% vorliegen.

**13.** Zusammensetzung enthaltend

a) ein dem oxidativen, thermischen oder lichtinduzierten Abbau unterworfenes organisches Material und
b) mindestens eine auf Trägermittel fixierte Verbindung der Formel I, II, III und/oder IV gemäss Anspruch 1.

**14.** Zusammensetzung gemäss Anspruch 13, worin die Komponente (b) in einer Menge von 1 bis 50 % bezogen auf das Gewicht der Komponente (a) vorliegt.

**15.** Zusammensetzung gemäss Anspruch 13, enthaltend neben den Komponenten (a) und (b) zusätzlich weitere Additive.

**16.** Zusammensetzung gemäss Anspruch 15, enthaltend als weitere Additive phenolische Antioxidantien, Lichtschutzmittel oder/und Verarbeitungsstabilisatoren.

**17.** Zusammensetzung gemäss Anspruch 15, enthaltend als weiteres Additiv mindestens eine Verbindung vom Typ der Benzofuran-2-one.

**18.** Zusammensetzung gemäss Anspruch 13, enthaltend als Komponente (a) natürliche, halbsynthetische oder synthetische Polymere.

**19.** Zusammensetzung gemäss Anspruch 13, enthaltend als Komponente (a) ein natürliches oder halbsynthetisches Polymer zur Papierherstellung.

**20.** Zusammensetzung gemäss Anspruch 13, enthaltend als Komponente (a) thermoplastische Polymere.

**21.** Zusammensetzung gemäss Anspruch 13, enthaltend als Komponente (a) ein Polyolefin.

**22.** Zusammensetzung gemäss Anspruch 13, enthaltend als Komponente (a) Polyethylen oder Polypropylen.

**23.** Zusammensetzung gemäss Anspruch 13, enthaltend als Komponente (a) Asphalt, Bitumen oder eine bituminöse Masse.

**24.** Verwendung der auf Trägermittel fixierten Verbindungen der Formel I, II, III und/oder IV gemäss Anspruch 1 als Füllstoffe und Stabilisatoren für organische Materialien gegen oxidativen, thermischen oder lichtinduzierten Abbau.

**25.** Verwendung gemäss Anspruch 24 als Verarbeitungsstabilisatoren (Thermostabilisatoren) in thermoplastischen Polymeren.

**26.** Verfahren zum Stabilisieren eines organischen Materials gegen oxidativen, thermischen oder lichtinduzierten Abbau, dadurch gekennzeichnet, dass man diesem mindestens eine auf Trägermittel fixierte Verbindung der in Anspruch 1 definierten Formel I, II III und/oder IV einverleibt oder auf dieses aufbringt.

**27.** Verfahren zum Einbringen eines Füllstoffs in ein organisches Material, dadurch gekennzeichnet, dass man den Füllstoff vor dem Einbringen ins organische Material zuerst mit einer Verbindung der in Anspruch 1 definierten Formel I, II, III und/oder IV beschichtet.

## Claims

**1.** A carrier-bound compound or compounds of the formula I, II, III and/or IV

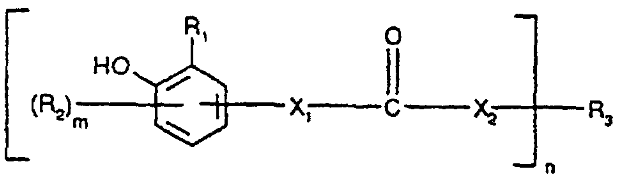

(I)

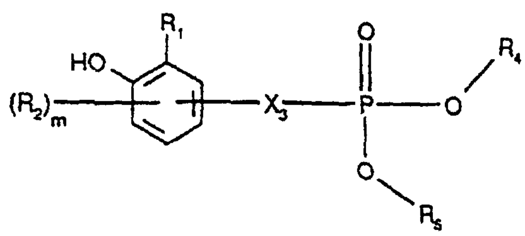

(II)

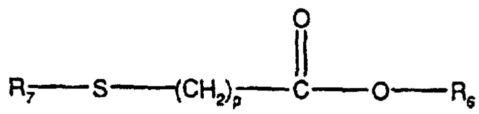

(III)

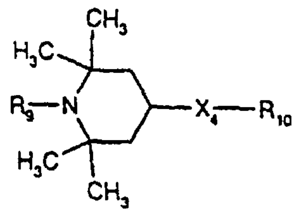

(IV)

in which

$R_1$ is $C_1$-$C_{18}$alkyl, $C_5$-$C_{12}$cycloalkyl, phenyl or $C_7$-$C_9$phenylalkyl,
$R_2$ is $C_1$-$C_{18}$alkyl, $C_5$-$C_{12}$cycloalkyl, phenyl or $C_7$-$C_9$phenylalkyl,
$R_4$ is hydrogen, $C_1$-$C_{20}$alkyl, naphthyl or phenyl which is unsubstituted or substituted by $C_1$-$C_4$alkyl; ammonium or $\frac{M^{r+}}{r}$,
$R_5$ is hydrogen, $C_1$-$C_{20}$alkyl, naphthyl or phenyl which is unsubstituted or is substituted by $C_1$-$C_4$alkyl; ammonium or $\frac{M^{r+}}{r}$,
$R_6$ is hydrogen, $C_1$-$C_{18}$alkyl, $C_5$-$C_{12}$cycloalkyl, $C_7$-$C_9$phenylalkyl, ammonium or $\frac{M^{r+}}{r}$,
$R_7$ is $C_1$-$C_{18}$alkyl, phenyl which is unsubstituted or is substituted by $C_1$-$C_4$alkyl; or $-(CH_2)_q-CO_2R_6$,
$R_8$ is $C_1$-$C_8$alkyl,
$R_9$ is hydrogen, $C_{12}$-$C_8$alkyl, $O^\bullet$, OH, NO, $-CH_2CN$, $C_1$-$C_{18}$alkoxy, $C_5$-$C_{12}$cycloalkyloxy, $C_3$-$C_6$alkenyl, $C_3$-$C_6$alkynyl, $C_1$-$C_8$acyl, $C_7$-$C_9$phenylalkyl which is unsubstituted or is substituted on the phenyl ring by $C_1$-$C_4$alkyl,
$R_{10}$ is

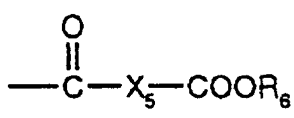
,
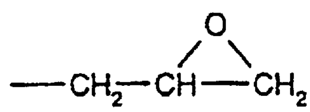

or $-X_6-COOR_6$,
$R_{11}$ is hydrogen or $C_1$-$C_{18}$alkyl,
$R_{12}$ is $C_1$-$C_{18}$alkyl or $C_2$-$C_{14}$alkenyl,
$R_{13}$ is hydrogen or $C_1$-$C_4$alkyl,
M is an r-valent metal cation,
$X_1$ is a direct bond, $C_1$-$C_8$alkylene, $C_2$-$C_8$alkylene which is interrupted by oxygen or sulfur;

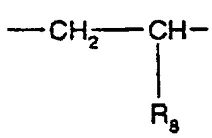
or
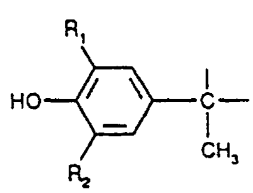
,

where $R_1$ and $R_2$ are as defined above,
$X_2$ is oxygen or -NH-,
$X_3$ is $C_1$-$C_6$alkylene,
$X_4$ is oxygen or $-NR_{11}-$,

$X_5$ is a direct bond, $C_1$-$C_8$alkylene, $C_2$-$C_8$alkenylene,

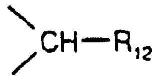, 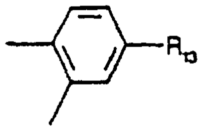,

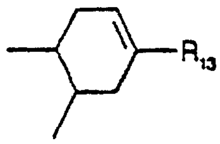 or 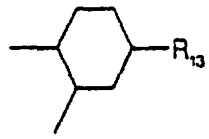,

$X_6$ is $C_1$-$C_{18}$alkylene, $C_2$-$C_{18}$alkenylene, $C_2$-$C_{18}$alkylene which is interrupted by oxygen or sulfur; or is phenylene,
m is 0, 1 or 2,
n is an integer from the range from 1 to 6,
p is 1 or 2,
q is 1 or 2,
r is 1, 2 or 3, and
if n is 1,
$R_3$ is hydrogen, $C_1$-$C_{25}$alkyl, $C_5$-$C_{12}$cycloalkyl, phenyl which is unsubstituted or is substituted by $C_1$-$C_4$alkyl; a monovalent radical of a hexose, a monovalent radical of a hexitol; and, if $X_2$ is oxygen, $R_3$ is additionally ammonium or $\frac{M^{r+}}{r}$, or,
if n is 2,
$R_3$ is $C_2$-$C_{12}$alkylene, $C_4$-$C_{12}$alkylene which is interrupted by oxygen or sulfur; a divalent radical of a hexose or a divalent radical or a hexitol, or,
if n is 3,
$R_3$ is

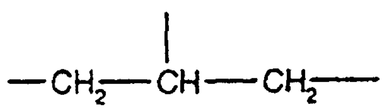,

a trivalent radical of a hexose or a trivalent radical of a hexitol, or,
if n is 4,
$R_3$ is $C_4$-$C_{10}$alkanetetrayl, a tetravalent radical of a hexose or a tetravalent radical of a hexitol, or,
if n is 5,
$R_3$ is a pentavalent radical of a hexose or a pentavalent radical of a hexitol, or,
if n is 6,
$R_3$ is

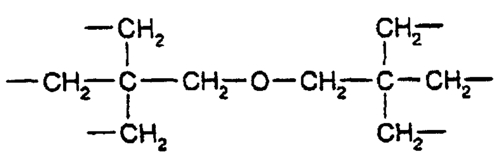

or a hexavalent radical of a hexitol;

and in which the carrier is an oxide- or hydroxide-, silicate- or carbonate-based filler.

**2.** A carrier-bound compound according to claim 1, wherein the compound or compounds is/are of the formula I, II and/or III.

**3.** A carrier-bound compound according to claim 1, wherein

$R_1$ is $C_1$-$C_{12}$alkyl, $C_5$-$C_8$cycloalkyl, phenyl or $C_7$-$C_9$phenylalkyl,

$R_2$ is $C_1$-$C_{12}$alkyl, $C_5$-$C_8$cycloalkyl, phenyl or $C_7$-$C_9$phenylalkyl,

$R_4$ is hydrogen, $C_1$-$C_{12}$alkyl, phenyl which is unsubstituted or is substituted by $C_1$-$C_4$alkyl; ammonium or $\frac{M^{r+}}{r}$,

$R_5$ is hydrogen, $C_1$-$C_{12}$alkyl, phenyl which is unsubstituted or is substituted by $C_1$-$C_4$alkyl; ammonium or $\frac{M^{r+}}{r}$,

$R_6$ is hydrogen, $C_1$-$C_{12}$alkyl, $C_5$-$C_8$cycloalkyl, $C_7$-$C_9$phenylalkyl, ammonium or $\frac{M^{r+}}{r}$,

$R_7$ is $C_2$-$C_{16}$alkyl, phenyl which is unsubstituted or is substituted by $C_1$-$C_4$alkyl; or is $-(CH_2)_q-CO_2R_6$,

$R_8$ is $C_1$-$C_4$alkyl,

M is an alkali metal, alkaline earth metal or aluminium,

$X_1$ is a direct bond, $C_1$-$C_6$alkylene, $C_2$-$C_6$alkylene which is interrupted by oxygen or sulfur; or is

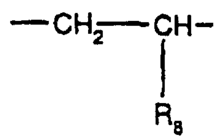

or

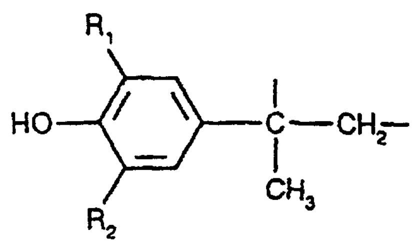

where $R_1$ and $R_2$ are as defined above,

$X_2$ is oxygen or -NH-,

$X_3$ is $C_1$-$C_5$alkylene,

m is 1 or 2,

n is an integer from the range from 1 to 4,

p is 1 or 2,

q is 1 or 2,

r is 1, 2 or 3, and,

if n is 1,

$R_3$ is hydrogen, $C_1$-$C_{18}$alkyl, $C_5$-$C_8$cycloalkyl, phenyl which is unsubstituted or is substituted by $C_1$-$C_4$alkyl; and, if $X_2$ is oxygen, $R_3$ is additionally ammonium or $\frac{M^{r+}}{r}$, or,

if n is 2

$R_3$ is $C_2$-$C_{10}$alkylene, $C_4$-$C_{10}$alkylene which is interrrupted by oxygen or sulfur, or,

if n is 3,

$R_3$ is

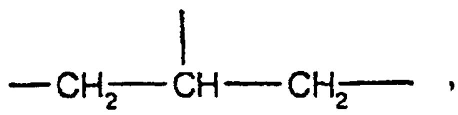

or,

if n is 4,

$R_3$ is $C_4$-$C_8$alkanetetrayl.

**4.** A carrier-bound compound according to claim 1, wherein

$R_1$ is $C_1$-$C_{10}$alkyl, $C_5$-$C_6$cycloalkyl, phenyl or benzyl,

$R_2$ is $C_1$-$C_{10}$alkyl, $C_5$-$C_6$cycloalkyl, phenyl or benzyl,

$R_4$ is hydrogen, $C_1$-$C_{10}$alkyl, phenyl, ammonium or $\frac{M^{r+}}{r}$,

$R_5$ is hydrogen, $C_1$-$C_{10}$alkyl, phenyl, ammonium or $\frac{M^{r+}}{r}$,

$R_6$ is hydrogen, $C_1$-$C_{10}$alkyl, $C_5$-$C_6$cycloalkyl, benzyl, ammonium or $\frac{M^{r+}}{r}$,

$R_7$ is $C_4$-$C_{14}$alkyl, phenyl or $-(CH_2)_q-CO_2R_6$,

$R_8$ is methyl,

M is an alkali metal, alkaline earth metal or aluminium,

$X_1$ is a direct bond, $C_1$-$C_4$alkylene, $C_2$-$C_6$alkylene which is interrupted by sulfur; or is

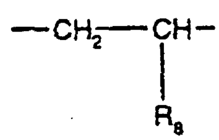

or

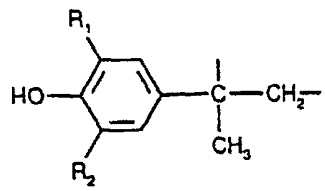

, where $R_1$ and $R_2$ are as defined above,

$X_2$ is oxygen,

$X_3$ is $C_1$-$C_4$alkylene,

m is 1 or 2,

n is an integer from the range from 1 to 4,

p is 2,

q is 2,

r is 1, 2 or 3, and,

if n is 1,

$R_3$ is hydrogen, $C_1$-$C_{12}$alkyl, $C_5$-$C_6$cycloalkyl, phenyl, ammonium or $\frac{M^{r+}}{r}$, or,

if n is 2,

$R_3$ is $C_2$-$C_8$alkylene, $C_4$-$C_{10}$alkylene which is interrupted by oxygen, or,

if n is 3,

$R_3$ is

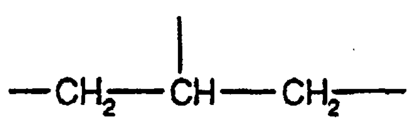 ,

or,

if n is 4,

$R_3$ is

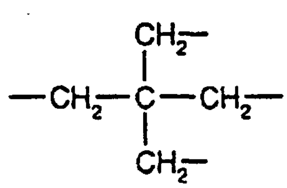 .

**5.** A carrier-bound compound according to claim 1, wherein

$R_1$ is tert-butyl,
$R_2$ is $C_1$-$C_4$alkyl and is ortho to the OH group, and
m is 1.

**6.** A carrier-bound compound according to claim 1, wherein $R_9$ is hydrogen, methyl, $C_8$-$C_{12}$-alkoxy, cyclohexyloxy or benzyl.

**7.** A carrier-bound compound according to claim 1, wherein

$R_6$ is hydrogen, $C_1$-$C_{10}$alkyl, $C_5$-$C_6$cycloalkyl, benzyl, ammonium or $\frac{M^{r+}}{r}$,
$R_9$ is hydrogen, $C_1$-$C_4$alkyl, $O^{\bullet}$, OH, NO, $C_4$-$C_{18}$alkoxy, $C_5$-$C_7$cycloalkoxy, $C_2$-$C_6$acyl, $C_7$-$C_9$phenylalkyl which is unsubstituted or is substituted on the phenyl ring by $C_1$-$C_4$alkyl,
$R_{10}$ is

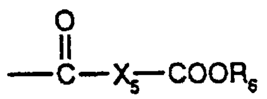 , 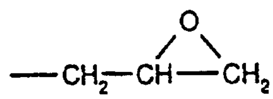

or -$X_6$-$COOR_6$,
$R_{11}$ is hydrogen or $C_1$-$C_{12}$alkyl,
$R_{12}$ is $C_1$-$C_{12}$alkyl or $C_6$-$C_{14}$alkenyl,
$R_{13}$ is hydrogen or methyl,
M is an alkali metal or an alkaline earth metal,
$X_4$ is oxygen or -$NR_{11}$-,
$X_5$ is a direct bond, $C_1$-$C_6$alkylene, $C_2$-$C_6$alkenylene,

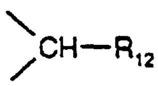 , 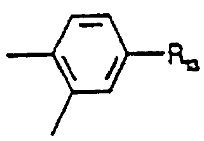 , 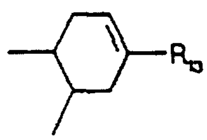 , or 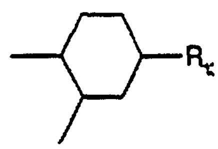 ,

$X_6$ is $C_1$-$C_{12}$alkylene, $C_2$-$C_{12}$alkenylene, $C_2$-$C_{12}$alkylene which is interrupted by oxygen; or is phenylene, and
r is 1 or 2.

**8.** A carrier-bound compound according to claim 1, wherein

$R_6$ is hydrogen, $C_1$-$C_8$alkyl, cyclohexyl or $\frac{M^{r+}}{r}$,
$R_9$ is hydrogen, $C_1$-$C_4$alkyl, $C_4$-$C_{18}$alkoxy, $C_5$-$C_7$cycloalkoxy, $C_2$-$C_6$acyl or $C_7$-$C_9$phenylalkyl,
$R_{10}$ is

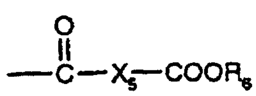 , 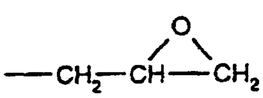 ,

or -$X_6$-$COOR_6$,
$R_{11}$ is hydrogen or $C_1$-$C_8$alkyl,
$R_{12}$ is $C_1$-$C_8$alkyl or $C_6$-$C_{14}$alkenyl,
$R_{13}$ is hydrogen or methyl,
M is an alkali metal or an alkaline earth metal,
$X_4$ is oxygen or -$NR_{11}$-,
$X_5$ is a direct bond, $C_1$-$C_6$alkylene,

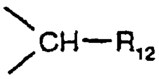, 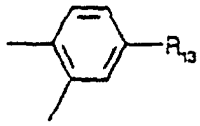, 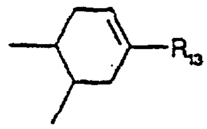 or 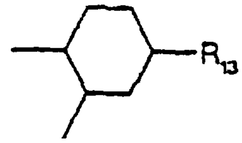,

$X_6$ is $C_1$-$C_8$alkylene, $C_2$-$C_8$alkenylene, $C_2$-$C_8$alkylene which is interrupted by oxygen; or is phenylene, and r is 1 or 2.

**9.** A carrier-bound compound according to claim 1, wherein

$R_1$ is $C_1$-$C_6$alkyl, cyclohexyl or phenyl,
$R_2$ is $C_1$-$C_6$alkyl, cyclohexyl or phenyl and is ortho to the OH group,
$R_3$ is hydrogen, $C_1$-$C_8$alkyl, cyclohexyl or $\frac{M^{r+}}{r}$,
$R_4$ is hydrogen, $C_1$-$C_8$alkyl or $\frac{M^{r+}}{r}$,
$R_5$ is hydrogen, $C_1$-$C_8$alkyl or $\frac{M^{r+}}{r}$,
$R_6$ is hydrogen, $C_1$-$C_8$alkyl, cyclohexyl or $\frac{M^{r+}}{r}$,
$R_7$ is $C_8$-$C_{14}$alkyl or - $(CH_2)_q$-$CO_2R_6$,
$R_8$ is methyl,
$R_9$ is hydrogen, $C_1$-$C_4$alkyl, $C_4$-$C_{12}$alkoxy, $C_5$-$C_7$cycloalkoxy, acetyl or $C_7$-$C_9$phenylalkyl,
$R_{10}$ is

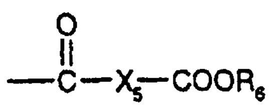, 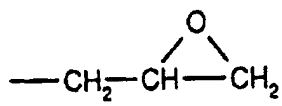,

or -$X_6$-$COOR_6$,
$R_{11}$ is hydrogen or $C_1$-$C_4$alkyl,
$R_{12}$ is $C_8$-$C_{14}$alkenyl,
$R_{13}$ is hydrogen or methyl,
M is an alkali metal or alkaline earth metal,
Xi is $C_2$-$C_4$alkylene, $C_2$-$C_4$alkylene which is interrupted by sulfur; or is,

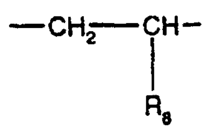,

$X_2$ is oxygen,
$X_3$ is $C_1$-$C_4$alkylene,
$X_4$ is oxygen or -$NR_{11}$-,
$X_5$ is a direct bond, $C_1$-$C_4$alkylene,

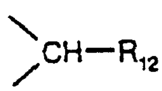, 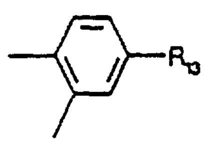, 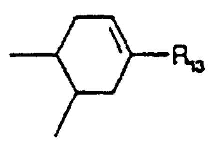

or

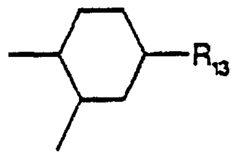

or
$X_6$ is $C_1$-$C_4$alkylene or phenylene,
m is 1 or 2,
n is 1,
p is 2,
q is 2, and
r is 1 or 2.

**10.** A carrier-bound compound according to claim 1, wherein

$R_1$ is tert-butyl,
$R_2$ is $C_1$-$C_4$alkyl and is ortho to the OH group,
$R_3$ is hydrogen or $C_1$-$C_4$alkyl,
$R_4$ is hydrogen, $C_1$-$C_4$alkyl or $\frac{M^{r+}}{r}$,
$R_5$ is hydrogen, $C_1$-$C_4$alkyl or $\frac{M^{r+}}{r}$,
$R_6$ is hydrogen,
$R_7$ is $C_{10}$-$C_{12}$alkyl,
$R_9$ is hydrogen, methyl, $C_8$-$C_{12}$alkoxy, cyclohexyloxy or benzyl,
$R_{10}$ is

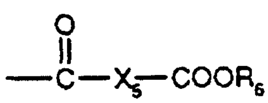 , 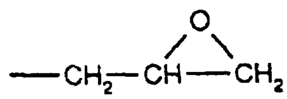

or -$X_6$-$COOR_6$,
$R_{11}$ is hydrogen,
$R_{12}$ is $C_{10}$-$C_{12}$alkenyl,
M is calcium,
$X_1$ is ethylene, or ethylene which is interrupted by sulfur,
$X_2$ is oxygen,
$X_3$ is methylene,
$X_4$ is oxygen or -$NR_{11}$-,
$X_5$ is ethylene or $-CH-R_{12}$,
$X_6$ is methylene,
m is 1,
n is 1,
p is 2, and
r is 2.

**11.** A carrier-bound compound according to claim 1, wherein the carrier is aluminium oxide, magnesium oxide, titanium oxide, silicon oxide, talc, calcium carbonate or dolomite.

**12.** A carrier-bound compound according to claim 1, wherein the compounds of the formula I, II, III and/or IV, relative to the weight of the carrier, are present in a quantity of from 0.01 to 10% by weight.

**13.** A composition comprising

a) an organic material which is subject to oxidative, thermal or light-induced degradation and
b) at least one carrier-bound compound of the formula I, II, III and/or IV according to claim 1.

**14.** A composition according to claim 13, wherein component (b) is present in a quantity of from 1 to 50% based on the weight of component (a).

**15.** A composition according to claim 13, additionally comprising further additives besides components (a) and (b).

**16.** A composition according to claim 15, comprising as further additives phenolic antioxidants, light stabilizers and/or processing stabilizers.

**17.** A composition according to claim 13, comprising as further additive at least one compound of the type of the 2-benzofuranones.

**18.** A composition according to claim 13, comprising as component (a) natural, semisynthetic or synthetic polymers.

**19.** A composition according to claim 13, comprising as component (a) a natural or semisynthetic polymer for papermaking.

**20.** A composition according to claim 13, comprising as component (a) thermoplastic polymers.

**21.** A composition according to claim 13, comprising as component (a) a polyolefin.

**22.** A composition according to claim 13, comprising as component (a) polyethylene or polypropylene.

**23.** A composition according to claim 13, comprising as component (a) asphalt, bitumen or a bituminous material.

**24.** Use of carrier-bound compounds of the formula I, II, III and/or IV according to claim 1 as fillers and stabilizers for organic materials against oxidative, thermal or light-induced degradation.

**25.** Use according to claim 24 as processing stabilizers (heat stabilizers) in thermoplastic polymers.

**26.** A method of stabilizing an organic material against oxidative, thermal or light-induced degradation, which comprises incorporating in or applying to this material at least one carrier-bound compound of the formula I, II, III and/or IV as defined in claim 1.

**27.** A method of introducing a filler into an organic material, which comprises first coating the filler, prior to its introduction into the organic material, with a compound of the formula I, II, III and/or IV as defined in claim 1.

## Revendications

**1.** Composés de formule I, II, III et/ou IV fixés sur un support:

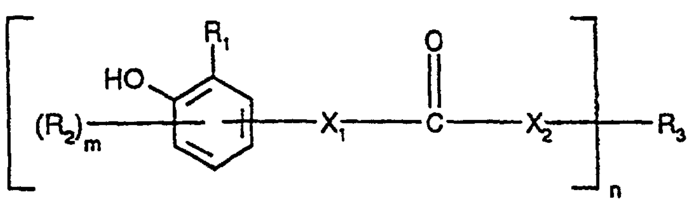

(I)

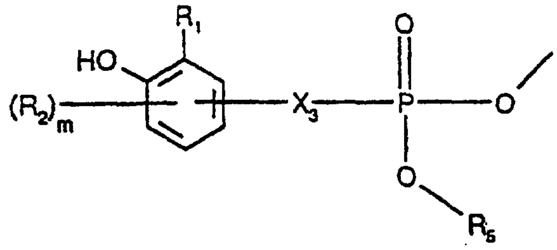

(II)

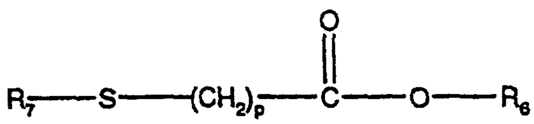

(III)

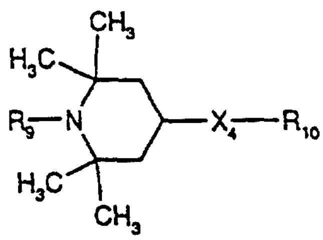

(IV)

dans lesquels

$R_1$ représente un reste alkyle en $C_1$-$C_{18}$, cycloalkyle en $C_5$-$C_{12}$, phényle ou phénylalkyle en $C_7$-$C_9$,
$R_2$ représente un reste alkyle en $C_1$-$C_{18}$, cycloalkyle en $C_5$-$C_{12}$, phényle ou phénylalkyle en $C_7$-$C_9$,
$R_4$ représente un atome d'hydrogène; un reste alkyle en $C_1$-$C_{20}$; un reste phényle ou naphtyle non substitué ou substitué par alkyle en $C_1$-$C_4$; un ammonium ou $\frac{M^{r+}}{r}$,
$R_5$ représente un atome d'hydrogène; un reste alkyle en $C_1$-$C_{20}$; un reste phényle ou naphtyle non substitué ou substitué par alkyle en $C_1$-$C_4$; un ammonium ou $\frac{M^{r+}}{r}$,
$R_6$ représente un atome d'hydrogène, un reste alkyle en $C_1$-$C_{18}$, cycloalkyle en $C_5$-$C_{12}$ ou phénylalkyle en $C_7$-$C_9$, un ammonium ou $\frac{M^{r+}}{r}$,
$R_7$ représente un reste alkyle en $C_1$-$C_{18}$; phényle non substitué ou substitué par alkyle en $C_1$-$C_4$; ou $-(CH_2)_q-CO_2R_6$,
$R_8$ représente un reste alkyle en $C_1$-$C_8$,
$R_9$ représente un atome d'hydrogène ou un reste alkyle en $C_1$-$C_8$, $O^\bullet$, OH, NO, $-CH_2CN$, alcoxy en $C_1$-$C_{18}$, cycloalcoxy en $C_5$-$C_{12}$, alcényle en $C_3$-$C_6$, alcynyle en $C_3$-$C_6$, acyle en $C_1$-$C_8$, ou phénylalkyle en $C_7$-$C_9$ non substitué ou substitué sur le cycle phényle par alkyle en $C_1$-$C_4$,
$R_{10}$ représente un groupe

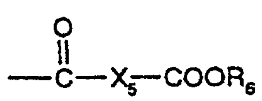 , 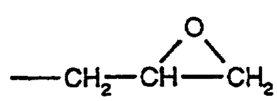

ou $-X_6-COOR_6$,
$R_{11}$ représente un atome d'hydrogène ou un reste alkyle en $C_1$-$C_{18}$,
$R_{12}$ représente un reste alkyle en $C_1$-$C_{18}$ ou alcényle en $C_2$-$C_{14}$,
$R_{13}$ représente un atome d'hydrogène ou un reste alkyle en $C_1$-$C_4$,

M est un cation métallique de valence r,

$X_1$ représente une liaison directe, un reste alkylène en $C_1$-$C_8$, un reste alkylène en $C_2$-$C_8$ interrompu par de l'oxygène ou du soufre; ou un groupe

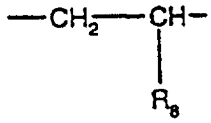 ou 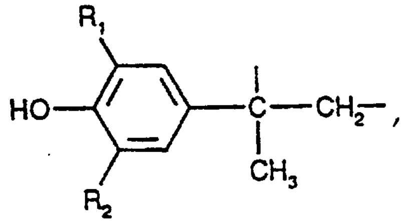

$R_1$ et $R_2$ ayant la signification donnée ci-dessus,

$X_2$ représente l'oxygène ou -NH-,

$X_3$ représente un reste alkylène en $C_1$-$C_6$,

$X_4$ représente l'oxygène ou $-NR_{11}-$,

$X_5$ représente une liaison directe ou un reste alkylène en $C_1$-$C_8$, alcénylène en $C_2$-$C_8$,

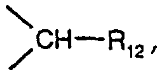 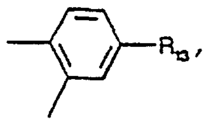 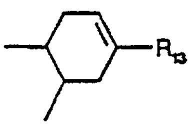 ou 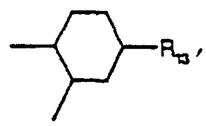

$X_6$ représente un reste alkylène en $C_1$-$C_{18}$, alcénylène en $C_2$-$C_{18}$, alkylène en $C_2$-$C_{18}$ interrompu par de l'oxygène ou du soufre, ou phénylène,

m est égal à 0,1 ou 2,

n est un nombre entier compris entre 1 et 6,

p est égal à 1 ou 2,

q est égal à 1 ou 2,

r est égal à 1, 2 ou 3, et

lorsque n = 1

$R_3$ représente un atome d'hydrogène, un reste alkyle en $C_1$-$C_{25}$, cycloalkyle en $C_5$-$C_{12}$ ou phényle non substitué ou substitué par alkyle en $C_1$-$C_4$; un reste monovalent d'un hexose ou un reste monovalent d'un hexitol; et, lorsque $X_2$ est un atome d'oxygène, $R_3$ représente en outre un ammonium ou $\frac{M^{r+}}{r}$, ou

lorsque n = 2,

$R_3$ représente un reste alkylène en $C_2$-$C_{12}$ ou alkylène en $C_4$-$C_{12}$ interrompu par de l'oxygène ou du soufre; un reste divalent d'un hexose ou un reste divalent d'un hexitol, ou

lorsque n = 3,

$R_3$ représente un groupe

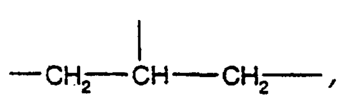

un reste trivalent d'un hexose ou un reste trivalent d'un hexitol, ou

lorsque n = 4,

$R_3$ représente un reste alcanetétrayle en $C_4$-$C_{10}$, un reste tétravalent d'un hexose ou un reste tétravalent d'un hexitol, ou

lorsque n = 5,

$R_3$ représente un reste pentavalent d'un hexose ou un reste pentavalent d'un hexitol, ou

lorsque n = 6

$R_3$ représente un groupe

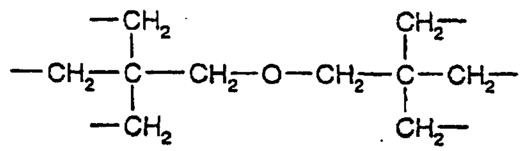

ou un reste hexavalent d'un hexitol; et

le support est une charge à base d'oxyde ou d'hydroxyde, à base de silicate ou à base de carbonate.

**2.** Composés fixés sur un support selon la revendication 1, les composés représentant des composés de formule I, II et/ou III.

**3.** Composés fixés sur un support selon la revendication 1, dans lesquels

$R_1$ représente un reste alkyle en $C_1$-$C_{12}$, cycloalkyle en $C_5$-$C_8$, phényle ou phénylalkyle en $C_7$-$C_9$,
$R_2$ représente un reste alkyle en $C_1$-$C_{12}$, cycloalkyle en $C_5$-$C_8$, phényle ou phénylalkyle en $C_7$-$C_9$,
$R_4$ représente un atome d'hydrogène; un reste alkyle en $C_1$-$C_{12}$; un reste phényle non substitué ou substitué par alkyle en $C_1$-$C_4$; un ammonium ou $\frac{M^{r+}}{r}$,
$R_5$ représente un atome d'hydrogène; un reste alkyle en $C_1$-$C_{12}$; un reste phényle non substitué ou substitué par alkyle en $C_1$-$C_4$; un ammonium ou $\frac{M^{r+}}{r}$
$R_6$ xreprésente un atome d'hydrogène, un reste alkyle en $C_1$-$C_{12}$, cycloalkyle en $C_5$-$C_8$ ou phénylalkyle en $C_7$-$C_9$, un ammonium ou $\frac{M^{r+}}{r}$,
$R_7$ représente un reste alkyle en $C_2$-$C_{16}$; phényle non substitué ou substitué par alkyle en $C_1$-$C_4$; ou $-(CH_2)_q-CO_2R_6$,
$R_8$ représente un reste alkyle en $C_1$-$C_4$,
M est un métal alcalin, un métal alcalino-terreux ou l'aluminium,
$X_1$ représente une liaison directe, un reste alkylène en $C_1$-$C_6$, un reste alkylène en $C_2$-$C_6$ interrompu par de l'oxygène ou du soufre; ou un groupe

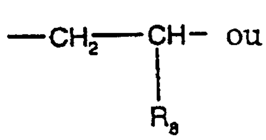 ou 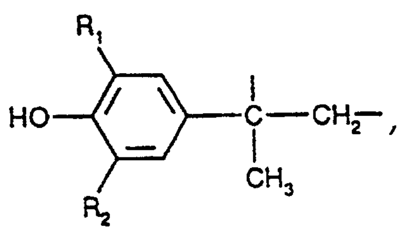

$R_1$ et $R_2$ ayant la signification donnée ci-dessus,
$X_2$ représente l'oxygène ou -NH-,
$X_3$ représente un reste alkylène en $C_1$-$C_5$,
m est égal à 1 ou 2,
n est un nombre entier compris entre 1 et 4,
p est égal à 1 ou 2,
q est égal à 1 ou 2,
r est égal à 1, 2 ou 3, et

lorsque n =1

$R_3$ représente un atome d'hydrogène ou un reste alkyle en $C_1$-$C_{18}$, cycloalkyle en $C_5$-$C_8$ ou phényle non substitué ou substitué par alkyle en $C_1$-$C_4$; et, lorsque $X_2$ est un atome d'oxygène, $R_3$ représente en outre un ammonium ou $\frac{M^{r+}}{r}$, ou

lorsque n = 2,

$R_3$ représente un reste alkylène en $C_2$-$C_{10}$ ou alkylène en $C_4$-$C_{10}$ interrompu par de l'oxygène ou du soufre, ou

lorsque n = 3,

$R_3$ représente un groupe

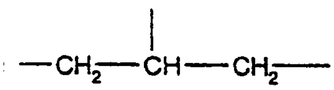

,

ou

lorsque n = 4,

$R_3$ représente un reste alcanetétrayle en $C_4$-$C_8$.

**4.** Composés fixés sur un support selon la revendication 1, dans lesquels

$R_1$ représente un reste alkyle en $C_1$-$C_{10}$, cycloalkyle en $C_5$-$C_6$, phényle ou benzyle,
$R_2$ représente un reste alkyle en $C_1$-$C_{10}$, cycloalkyle en $C_5$-$C_6$, phényle ou benzyle,
$R_4$ représente un atome d'hydrogène, un reste alkyle en $C_1$-$C_{10}$ ou phényle, un ammonium ou $\frac{M^{r+}}{r}$,
$R_5$ représente un atome d'hydrogène, un reste alkyle en $C_1$-$C_{10}$ ou phényle, un ammonium ou $\frac{M^{r+}}{r}$,
$R_6$ représente un atome d'hydrogène ou un reste alkyle en $C_1$-$C_{10}$, cycloalkyle en $C_5$-$C_6$, benzyle, ammonium ou $\frac{M^{r+}}{r}$,
$R_7$ représente un reste alkyle en $C_4$-$C_{14}$, phényle ou $-(CH_2)_q-CO_2R_6$,
$R_8$ représente un reste méthyle,
M est un métal alcalin, un métal alcalino-terreux ou l'aluminium,
$X_1$ représente une liaison directe, un reste alkylène en $C_1$-$C_4$, un reste alkylène en $C_2$-$C_6$ interrompu par du soufre; ou un groupe

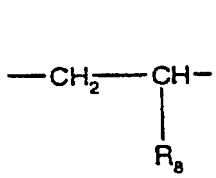 ou 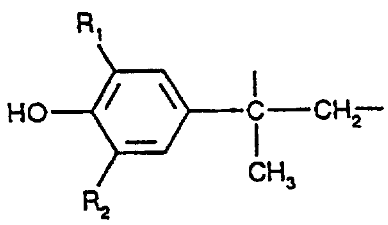 ,

$R_1$ et $R_2$ ayant la signification donnée ci-dessus,
$X_2$ représente l'oxygène,
$X_3$ représente un reste alkylène en $C_1$-$C_4$,
m est égal à 1 ou 2,
n est un nombre entier compris entre 1 et 4,
p est égal à 2,
q est égal à 2,
r est égal à 1, 2 ou 3, et

lorsque n = 1

$R_3$ représente un atome d'hydrogène ou un reste alkyle en $C_1$-$C_{12}$, cycloalkyle en $C_5$-$C_6$, phényle, ammonium ou $\frac{M^{r+}}{r}$, ou

lorsque n = 2,

$R_3$ représente un reste alkylène en $C_2$-$C_8$ ou alkylène en $C_4$-$C_{10}$ interrompu par de l'oxygène, ou

lorsque n = 3,

$R_3$ représente un groupe

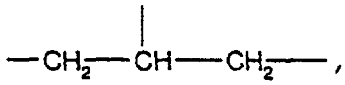

ou

lorsque n = 4,

$R_3$ représente un groupe

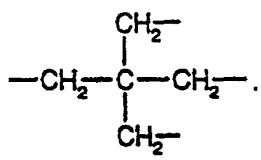

**5.** Composés fixés sur un support selon la revendication 1, dans lesquels

$R_1$ représente un reste tert-butyle,
$R_2$ représente un radical alkyle en $C_1$-$C_4$ et est lié en position ortho par rapport au groupe OH, et
m est égal à 1.

**6.** Composés fixés sur un support selon la revendication 1, dans lesquels $R_9$ représente un atome d'hydrogène ou un reste méthyle, alcoxy en $C_8$-$C_{12}$, cyclohexyloxy ou benzyle.

**7.** Composés fixés sur un support selon la revendication 1, dans lesquels

$R_6$ représente un atome d'hydrogène, un reste alkyle en $C_1$-$C_{10}$, cycloalkyle en $C_5$-$C_6$, benzyle, un ammonium ou $\frac{M^{r+}}{r}$,
$R_9$ représente un atome d'hydrogène ou un reste alkyle en $C_1$-$C_4$, $O^\bullet$, OH, NO, alcoxy en $C_4$-$C_{18}$, cycloalcoxy en $C_5$-$C_7$, acyle en $C_2$-$C_6$ ou phénylalkyle en $C_7$-$C_9$ non substitué ou substitué sur le cycle phényle par alkyle en $C_1$-$C_4$,
$R_{10}$ représente un groupe

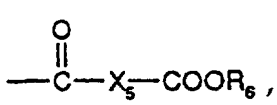 , 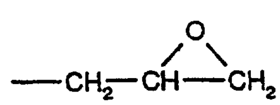

ou $-X_6-COOR_6$,
$R_{11}$ représente un atome d'hydrogène ou un reste alkyle en $C_1$-$C_{12}$,
$R_{12}$ représente un reste alkyle en $C_1$-$C_{12}$ ou alcényle en $C_6$-$C_{14}$,
$R_{13}$ représente un atome d'hydrogène ou un reste méthyle,
M est un métal alcalin ou un métal alcalino-terreux,
$X_4$ représente l'oxygène ou $-NR_{11}-$,

$X_5$ représente une liaison directe, un reste alkylène en $C_1$-$C_6$, alcénylène en

$C_2$-$C_6$, 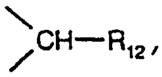, 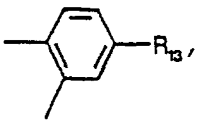, 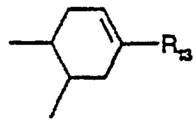 ou 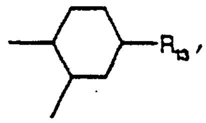,

$X_6$ représente un reste alkylène en $C_1$-$C_{12}$, alcénylène en $C_2$-$C_{12}$, alkylène en $C_2$-$C_{12}$ interrompu par de l'oxygène, ou phénylène, et

r est égal à 1 ou 2.

**8.** Composés fixés sur un support selon la revendication 1, dans lesquels

$R_6$ représente un atome d'hydrogène, un reste alkyle en $C_1$-$C_8$ ou cyclohexyle ou $\frac{M^{r+}}{r}$,

$R_9$ représente un atome d'hydrogène ou un reste alkyle en $C_1$-$C_4$, alcoxy en $C_4$-$C_{18}$, cycloalcoxy en $C_5$-$C_7$, acyle en $C_2$-$C_6$ ou phénylalkyle en $C_7$-$C_9$,

$R_{10}$ représente un groupe

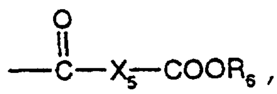, 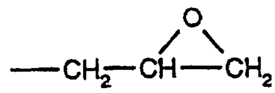

ou $-X_6$-$COOR_6$,

$R_{11}$ représente un atome d'hydrogène ou un reste alkyle en $C_1$-$C_8$,

$R_{12}$ représente un reste alkyle en $C_1$-$C_8$ ou alcényle en $C_6$-$C_{14}$,

$R_{13}$ représente un atome d'hydrogène ou un reste méthyle,

M est un métal alcalin ou un métal alcalino-terreux,

$X_4$ représente l'oxygène ou $-NR_{11}$-,

$X_3$ représente une liaison directe, un reste alkylène en $C_1$-$C_6$,

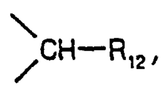,

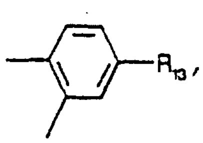, 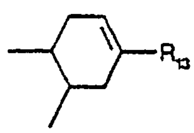 ou 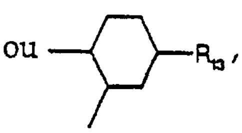,

$X_6$ représente un reste alkylène en $C_1$-$C_8$, alcénylène en $C_2$-$C_8$, alkylène en $C_2$-$C_8$ interrompu par de l'oxygène, ou phénylène, et

r est égal à 1 ou 2.

**9.** Composés fixés sur un support selon la revendication 1, dans lesquels

$R_1$ représente un reste alkyle en $C_1$-$C_6$, cyclohexyle ou phényle,

$R_2$ représente un reste alkyle en $C_1$-$C_6$, cyclohexyle ou phényle, et est lié en position ortho par rapport au groupe OH,

$R_3$ représente un atome d'hydrogène, un reste alkyle en $C_1$-$C_8$ ou cyclohexyle ou $\frac{M^{r+}}{r}$,

$R_4$ représente un atome d'hydrogène, un reste alkyle en $C_1$-$C_8$ ou $\frac{M^{r+}}{r}$,

$R_5$ représente un atome d'hydrogène, un reste alkyle en $C_1$-$C_8$ ou $\frac{M^{r+}}{r}$,

$R_6$ représente un atome d'hydrogène, un reste alkyle en $C_1$-$C_8$ ou cyclohexyle ou $\frac{M^{r+}}{r}$,

$R_7$ représente un reste alkyle en $C_8$-$C_{14}$ ou $-(CH_2)_q$-$CO_2R_6$,

$R_8$ représente un reste méthyle,

$R_9$ représente un atome d'hydrogène ou un reste alkyle en $C_1$-$C_4$, alcoxy en $C_4$-$C_{12}$, cycloalcoxy en $C_5$-$C_7$, acétyle ou phénylalkyle en $C_7$-$C_9$,

$R_{10}$ représente un groupe

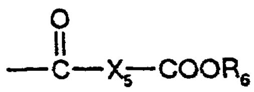,
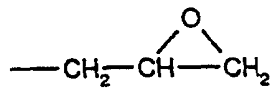

ou -$X_6$-$COOR_6$,

$R_{11}$ représente un atome d'hydrogène ou un reste alkyle en $C_1$-$C_4$,

$R_{12}$ représente un reste alcényle en $C_8$-$C_{14}$,

$R_{13}$ représente un atome d'hydrogène ou un reste méthyle,

M est un métal alcalin ou un métal alcalino-terreux,

$X_1$ représente un reste alkylène en $C_2$-$C_4$, un reste alkylène en $C_2$-$C_6$ interrompu par du soufre; ou un groupe

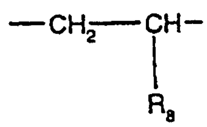

$X_2$ représente l'oxygène,

$X_3$ représente un reste alkylène en $C_1$-$C_4$,

$X_4$ représente l'oxygène ou -$NR_{11}$-,

$X_5$ représente une liaison directe, un reste alkylène en $C_1$-$C_4$,

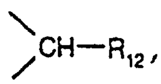,

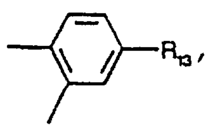, 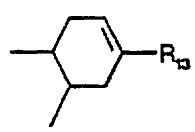 ou 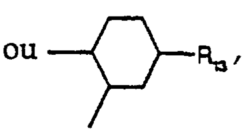,

$X_6$ représente un reste alkylène en $C_1$-$C_4$, ou phénylène,

m est égal à 1 ou 2,

n est égal à 1,

p est égal à 2,

q est égal à 2,

r est égal à 1 ou 2.

**10.** Composés fixés sur un support selon la revendication 1, dans lesquels

$R_1$ représente un reste tert-butyle,

$R_2$ représente un reste alkyle en $C_1$-$C_4$ et est lié en position ortho par rapport au groupe OH,

$R_3$ représente un atome d'hydrogène ou un reste alkyle en $C_1$-$C_4$,

$R_4$ représente un atome d'hydrogène, un reste alkyle en $C_1$-$C_4$ ou $\frac{M^{r+}}{r}$,

$R_5$ représente un atome d'hydrogène, un reste alkyle en $C_1$-$C_4$ ou $\frac{M^{r+}}{r}$,

$R_6$ représente un atome d'hydrogène,

$R_7$ représente un reste alkyle en $C_{10}$-$C_{12}$,

$R_9$ représente un atome d'hydrogène ou un reste méthyle, alcoxy en $C_8$-$C_{12}$, cyclohexyloxy ou benzyle,

$R_{10}$ représente un groupe

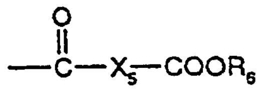, 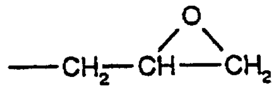

ou $-X_6-COOR_6$,

$R_{11}$ représente un atome d'hydrogène,

$R_{12}$ représente un reste alcényle en $C_{10}-C_{12}$,

M représente le calcium,

$X_1$ représente un reste éthylène ou éthylène interrompu par du soufre,

$X_2$ représente l'oxygène,

$X_3$ représente un reste méthylène,

$X_4$ représente l'oxygène ou $-NR_{11}-$,

$X_5$ représente un reste éthylène ou

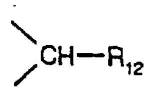,

$X_6$ représente un reste méthylène,

m est égal à 1,

n est égal à 1,

p est égal à 2, et

r est égal à 2.

**11.** Composés fixés sur un support selon la revendication 1, dans lesquels le support est l'oxyde d'aluminium, l'oxyde de magnésium, l'oxyde de titane, l'oxyde de silicium, le talc, le carbonate de calcium ou une dolomite.

**12.** Composés fixés sur un support selon la revendication 1, contenant les composés de formule I, II, III et/ ou IV en une quantité de 0,01 à 10 % en masse par rapport à la masse du support.

**13.** Composition contenant

a) un matériau organique soumis à une dégradation par oxydation, par la chaleur ou par la lumière et
b) au moins un composé de formule I, II, III et/ou IV fixé sur un support selon la revendication 1.

**14.** Composition selon la revendication 13, contenant le constituant (b) en une quantité de 1 à 50 % par rapport à la masse du constituant (a).

**15.** Composition selon la revendication 13, contenant encore d'autres additifs, en plus des constituants (a) et (b).

**16.** Composition selon la revendication 15, contenant comme autres additifs des antioxydants, des photostabilisants et/ou des stabilisants à la mise en oeuvre.

**17.** Composition selon la revendication 15, contenant comme autre additif au moins un composé de type benzofuran-2-one.

**18.** Composition selon la revendication 13, contenant comme constituant (a) des polymères naturels, semi-synthétiques ou synthétiques.

**19.** Composition selon la revendication 13, contenant comme constituant (a) un polymère naturel ou semi-synthétique pour la fabrication de papier.

**20.** Composition selon la revendication 13, contenant comme constituant (a) des polymères thermoplastiques.

**21.** Composition selon la revendication 13, contenant comme constituant (a) une polyoléfine.

**22.** Composition selon la revendication 13, contenant comme constituant (a) du polyéthylène ou du polypropylène.

**23.** Composition selon la revendication 13, contenant comme constituant (a) de l'asphalte, du bitume ou une composition bitumineuse.

**24.** Utilisation des composés de formule I, II, III et/ou IV fixés sur un support selon la revendication 1 comme charges et stabilisants de matériaux organiques contre la dégradation due à l'oxydation, la chaleur ou la lumière.

**25.** Utilisation selon la revendication 24 comme stabilisants à la mise en oeuvre (stabilisants à la chaleur) dans des polymères thermoplastiques.

**26.** Procédé de stabilisation d'un matériau organique contre la dégradation due à l'oxydation, la chaleur ou la lumière, caractérisé en ce que l'on incorpore dans ce matériau ou on applique sur ce matériau au moins un composé ayant la formule I, II, III et/ou IV définie dans la revendication 1, fixé sur un support.

**27.** Procédé d'introduction d'une charge dans un matériau organique, caractérisé en ce que, avant de l'introduire dans le matériau organique, on enrobe d'abord la charge avec un composé de formule I, II, III et/ ou IV définie dans la revendication 1.